# EUROPEAN PATENT SPECIFICATION

(11) **EP 4 156 367 B1**
(45) Date of publication and mention of the grant of the patent: **17.06.2026**
(21) Application number: 22752159.8
(22) Date of filing: 27.01.2022
(51) Int. Cl.: H01M 10/04, H01M 10/058, H01M 50/10, H01M 10/0585, H01M 10/0587, H01M 10/42, H01M 50/105, H01M 50/112, H01M 50/528, H01M 50/538, H01M 50/54, H01M 50/204, H01M 50/247, H01M 50/262

(54) **BATTERY AND ELECTRONIC DEVICE**
BATTERIE UND ELEKTRONISCHE VORRICHTUNG
BATTERIE ET DISPOSITIF ÉLECTRONIQUE

(30) Priority: 09.02.2021 CN 202110179658; 25.04.2021 CN 202110448941; 29.07.2021 CN 202110866017
(43) Date of publication of application: 29.03.2023
(73) Proprietor: Honor Device Co., Ltd., Shenzhen, Guangdong 518040 (CN)
(72) Inventor: LU, Lun, Shenzhen, Guangdong 518040 (CN); ZHU, Hua, Shenzhen, Guangdong 518040 (CN); CHEN, Wei, Shenzhen, Guangdong 518040 (CN); CHEN, Yufei, Shenzhen, Guangdong 518040 (CN); DENG, Bin, Shenzhen, Guangdong 518040 (CN)
(74) Representative: Gill Jennings & Every LLP
(86) International application number: PCT/CN2022/074420
(87) International publication number: WO 2022/170998

(56) References cited:
- WO-A1-2013/042612
- CN-A- 105 006 586
- CN-A- 106 159 333
- CN-A- 111 916 602
- CN-U- 209 822 814
- KR-A- 20030 066 960
- KR-A- 20140 102 383
- US-A1- 2009 123 829
- US-A1- 2013 089 761
- US-A1- 2016 336 562
- US-A1- 2018 026 254

## Description

### TECHNICAL FIELD

This application relates to the field of electronic device technologies, and in particular, to a battery and an electronic device.

### BACKGROUND

At present, batteries are widely used in various electronic devices to provide power for them. As electronic devices are used in more diversified scenarios, it is required for the same battery to have different characteristics. For example, in hot weather, the battery is required to feature high temperature resistance. In cold weather, the battery is required to feature low temperature resistance. In a scenario of a relatively short allowable charging time, the battery is required to feature fast charging. In a scenario of a long journey, the battery is required to have a large capacity and high energy density to ensure battery life. However, characteristics of existing batteries are usually fixed and dull, which often cannot meet requirements in multiple use scenarios. US 2016/336562 A1 discloses packaging of bare cell stacks within device enclosures for portable electronic devices. US 2009/123829 A1 discloses a battery pack and electronic device using the same. US 2013/089761 A1 discloses a rechargeable battery cell and battery. US2018026254A1 discloses a battery comprising bare cells stacked with an insulating layer there-between, both cells housed within the same housing.

### SUMMARY

Embodiments of this application provide a battery and an electronic device, which can make the battery have different characteristics to meet use requirements for the battery in different application scenarios.

To achieve the foregoing objective, the following technical solutions are used in the embodiments of this application.

According to a first aspect, the invention provides a battery. The battery includes a first cell and a second cell, where the first cell is different from the second cell. Specifically, the difference between the first cell and the second cell may be reflected in at least one of electrochemical characteristics, structure, or size.

The battery provided in the embodiments of this application is a composite of two different cells, so that the battery has at least two different characteristics. The characteristics of the cell include, but are not limited to, characteristics in volumetric energy density, gravimetric energy density, life, charging capability, high and low temperature resistance, safety, and the like. Therefore, use requirements in at least two scenarios can be met.

The first cell is one of a high-energy cell, a fast-charging cell, a high-temperature-resistant cell, a low-temperature-resistant cell, and a long-life cell; and the second cell is another of a high-energy cell, a fast-charging cell, a high-temperature-resistant cell, a low-temperature-resistant cell, and a long-life cell. Therefore, a composite battery having two characteristics, such as a high-energy fast-charging battery, a fast-charging high-temperature-resistant battery, a high-energy low-temperature-resistant battery, a high-energy long-life battery, or a high-temperature-resistant long-life battery, can be formed, so that the battery meets requirements in at least two use scenarios.

According to the first aspect, the first cell includes a first shell and a first bare cell. The first bare cell is disposed in the first shell. The second cell includes a second shell and a second bare cell. The second bare cell is disposed in the second shell. The first shell and the second shell are the same shell. The first bare cell and the second bare cell are stacked. In this way, the first cell and the second cell share the shell, and the first cell and the second cell form a composite cell. On the premise that the volume of the battery is constant, the shell in the composite cell occupies a small volume, and the battery has a high energy density, which can improve a space utilization rate of the device.

In a possible implementation of the first aspect, the first bare cell has a first tab and a second tab. One end of the first tab of the first bare cell is electrically connected to the first bare cell, and the other end thereof extends out of the first shell through the first shell. One end of the second tab of the first bare cell is electrically connected to the first bare cell, and the other end thereof extends out of the first shell through the first shell. The first tab of the first bare cell is one of a positive electrode tab and a negative electrode tab, and the second tab of the first bare cell is the other of a positive electrode tab and a negative electrode tab. The first tab of the first bare cell and the second tab of the first bare cell form a first charging and discharging port. The second bare cell has a first tab and a second tab. One end of the first tab of the second bare cell is electrically connected to the second bare cell, and the other end thereof extends out of the second shell through the second shell. One end of the second tab of the second bare cell is electrically connected to the second bare cell, and the other end thereof extends out of the second shell through the second shell. The first tab of the second bare cell is one of a positive electrode tab and a negative electrode tab, and the second tab of the second bare cell is the other of a positive electrode tab and a negative electrode tab. The first tab of the second bare cell and the second tab of the second bare cell form a second charging and discharging port.

In a possible implementation of the first aspect, when the first cell and the second cell share the shell, the first bare cell is different from the second bare cell, specifically in at least one of their shape, size, process, structure, or material system, and in particular, the structure and/or material system. The difference in shape refers to a difference in the shape of appearance. The difference in size is mainly reflected in a difference in the length, width, and height of the bare cells, as well as the volume occupied by the three-dimensional space. The difference in process is mainly reflected in a difference in manufacturing and processing methods of the bare cells. For example, one of the two bare cells is wound, and the other is stacked. The difference in structure refers to a difference in at least one of the number of tabs of the bare cells, positions of the tabs, winding methods of the bare cells, stacking methods of the bare cells, or the like. The difference in material system refers to a difference in at least one of an electrode material type of the bare cells, a current collector type and thickness, a coating weight of the electrode material, compacted density of the electrode material, a length difference and width difference between the electrode plate and the separator, a length difference and width difference between the electrode plates, or the like. Therefore, the first cell and the second cell have different characteristics.

According to the first aspect, when the first cell and the second cell share the shell, the battery further includes an isolation layer. The isolation layer is disposed in an inner space of the shell to divide the inner space of the shell into a first chamber and a second chamber that are separate from each other. The first bare cell is disposed in the first chamber, and the second bare cell is disposed in the second chamber. In this way, different electrolytes may be respectively provided in the first chamber and the second chamber, which is beneficial to maximize the characteristics of the first cell and the characteristics of the second cell, respectively. Further, the isolation layer may separate the first bare cell from the second bare cell, which can prevent a short circuit between the first bare cell and the second bare cell. Still further, the first bare cell and the second bare cell may be respectively infiltrated in the two electrolytes, the two electrolytes may be separated by the isolation layer, and each electrolyte only needs to withstand a charging and discharging voltage of a corresponding bare cell, thereby improving the safety performance of the battery and prolonging the service life of the battery.

In a possible implementation of the first aspect, the first bare cell and the second bare cell have the same size and are stacked, that is, an orthographic projection of the first bare cell on the second bare cell coincides with the second bare cell. In this way, the isolation layer is configured to insulate and isolate the first bare cell from the second bare cell.

In a possible implementation of the first aspect, the volume of the first bare cell is less than that of the second bare cell, and the end of the first bare cell provided with the tabs is staggered with the end of the second bare cell provided with the tabs. On this basis, the isolation layer is also located between the tabs of the first bare cell and the second bare cell, so as to provide insulation and isolation and reduce the risk of short circuit between the tabs of the first bare cell and the second bare cell.

In a possible implementation of the first aspect, the volume of the first bare cell is greater than that of the second bare cell, and the end of the first bare cell provided with the tabs is staggered with the end of the second bare cell provided with the tabs. The isolation layer is also located between the first bare cell and the tabs of the second bare cell, so as to provide insulation and isolation and reduce the risk of short circuit between the first bare cell and the tabs of the second bare cell.

In a possible implementation of the first aspect, in addition to the first tab and the second tab, the first bare cell may further have a third tab, a fourth tab, and the like. The third tab and the fourth tab each are a positive electrode tab or a negative electrode tab. As the number of tabs increases, the number of charging and discharging links of the first bare cell also increases. When a plurality of charging and discharging links are used to charge and discharge at the same time, high-current charging can be implemented, and an overall temperature rise of the tabs and the cell can be reduced, which can not only improve the charging speed of the first bare cell, but also improve thermal safety performance of the battery. However, as the number of tabs increases, the structural complexity of the first bare cell also increases, and a circuit structure of the protection board also becomes increasingly complex. Therefore, in the embodiments of this application, the three aspects of the charging speed, the thermal safety performance, and the structural complexity can be comprehensively considered, so as to set a reasonable number of tabs for different application scenarios, and focus on optimizing the charging speed and the thermal safety performance, and simplifying the structural complexity, or take into account the charging speed, the thermal safety performance, and the structural complexity at the same time.

In a possible implementation of the first aspect, in addition to the first tab and the second tab, the second bare cell may further have a third tab, a fourth tab, and the like. The third tab and the fourth tab each are a positive electrode tab or a negative electrode tab. As the number of tabs increases, the number of charging and discharging links of the second bare cell also increases. When a plurality of charging and discharging links are used to charge and discharge at the same time, high-current charging can be implemented, and an overall temperature rise of the tabs and the cell can be reduced, which can not only improve the charging speed of the second bare cell, but also improve thermal safety performance of the battery. However, as the number of tabs increases, the structural complexity of the second bare cell also increases, and a circuit structure of the protection board also becomes increasingly complex. Therefore, in the embodiments of this application, the three aspects of the charging speed, the thermal safety performance, and the structural complexity can be comprehensively considered, so as to set a reasonable number of tabs for different application scenarios, and focus on optimizing the charging speed and the thermal safety performance, and simplifying the structural complexity, or take into account the charging speed, the thermal safety performance, and the structural complexity at the same time.

In a possible implementation of the first aspect, the first tab of the first bare cell and the first tab of the second bare cell are both positive electrode tabs, and the second tab of the first bare cell and the second tab of the second bare cell are both negative electrode tabs. Alternatively, the first tab of the first bare cell and the first tab of the second bare cell are both negative electrode tabs, and the second tab of the first bare cell and the second tab of the second bare cell are both positive electrode tabs. On this basis, the first tab of the first bare cell and the first tab of the second bare cell are stacked, and are secured and electrically connected together by welding, pressing, or the like to form a composite tab. The second tab of the first bare cell and the second tab of the second bare cell are stacked, and are secured and electrically connected together by welding, pressing, or the like to form a composite tab. In this way, the composite cell, from the appearance, has at least two composite tabs. The two terminals of the first charging and discharging port are respectively integrated with the two terminals of the second charging and discharging port, and the first charging and discharging port and the second charging and discharging port are integrated into one charging and discharging port. With the same charging and discharging port, the first cell and the second cell can be charged or discharged at the same time.

In a possible implementation of the first aspect, the first tab of the first bare cell is one of a positive electrode tab and a negative electrode tab, and the second tab of the first bare cell is the other of a positive electrode tab and a negative electrode tab. The first tab of the second bare cell is one of a positive electrode tab and a negative electrode tab, and the second tab of the second bare cell is the other of a positive electrode tab and a negative electrode tab. On this basis, the first tab of the first bare cell, the second tab of the first bare cell, the first tab of the second bare cell, and the second tab of the second bare cell are separate from each other. In this way, the composite cell, from the appearance, has at least four tabs, and the first charging and discharging port and the second charging and discharging port are different charging and discharging ports. Specifically, the first tab of the first bare cell and the second tab of the first bare cell form a first charging and discharging port, and the first tab of the second bare cell and the second tab of the second bare cell form a second charging and discharging port. The first charging and discharging port and the second charging and discharging port do not interfere with each other. With the first charging and discharging port and the second charging and discharging port, the first cell and the second cell can be charged or discharged at the same time, or only the first cell or the second cell can be charged or discharged, or the second cell may be discharged while the first cell is being charged, or the second cell may be charged while the first cell is being discharged. Therefore, the composite cell has a plurality of charging and discharging modes to meet requirements in different application scenarios.

In a possible implementation of the first aspect, the first tab of the first bare cell is one of a positive electrode tab and a negative electrode tab, and the second tab of the first bare cell is the other of a positive electrode tab and a negative electrode tab. The first tab of the second bare cell is one of a positive electrode tab and a negative electrode tab, and the second tab of the second bare cell is the other of a positive electrode tab and a negative electrode tab. On this basis, the second tab of the first bare cell and the second tab of the second bare cell are stacked, and are secured and electrically connected together by welding, pressing, or the like to form a composite tab. The first tab of the first bare cell and the first tab of the second bare cell are located on two opposite sides of the composite tab, respectively. In this way, the composite cell, from the appearance, has at least one composite tab. One terminal of the first charging and discharging port is integrated with one terminal of the second charging and discharging port, and the first cell and the second cell are connected in parallel or in series to form the composite cell. Specifically, when the second tab of the first bare cell and the second tab of the second bare cell are both positive electrode tabs, the first cell and the second cell share the negative electrode, and the first cell and the second cell are connected in parallel to form the composite cell. When the second tab of the first bare cell and the second tab of the second bare cell are both negative electrode tabs, the first cell and the second cell share the positive electrode, and the first cell and the second cell are connected in parallel to form the composite cell. When the second tab of the first bare cell is a positive electrode tab, and the second tab of the second bare cell is a negative electrode tab, or when the second tab of the first bare cell is a negative electrode tab, and the second tab of the second bare cell is a positive electrode tab, the first cell and the second cell are connected in series to form the composite cell. When the first cell and the second cell are connected in parallel or in series to form the composite cell, with the first charging and discharging port and the second charging and discharging port, the first cell and the second cell can be charged or discharged at the same time, or only the first cell or the second cell can be charged or discharged, or the second cell may be discharged while the first cell is being charged, or the second cell may be charged while the first cell is being discharged. Therefore, the battery has a plurality of charging and discharging modes to meet requirements in different application scenarios.

In a possible implementation of the first aspect, a protection board is further included, and the protection board has a first charging and discharging circuit and a second charging and discharging circuit. The first charging and discharging circuit is electrically connected to the first bare cell through the first charging and discharging port. On this basis, the protection board further has a third charging and discharging port, and the third charging and discharging port is located on the first charging and discharging circuit. The protection board is configured to be electrically connected to the power management module, the charging management module, and the charger through the third charging and discharging port, so as to form a charging and discharging link. Similarly, the second charging and discharging circuit is electrically connected to the second bare cell through the second charging and discharging port. On this basis, the protection board further has a fourth charging and discharging port, and the fourth charging and discharging port is located on the second charging and discharging circuit. The protection board is configured to be electrically connected to the power management module, the charging management module, and the charger through the fourth charging and discharging port, so as to form another charging and discharging link.

In a possible implementation of the first aspect, the protection board is secured to an end face of the composite cell (including the first cell and the second cell) provided with the tabs, and the protection board is parallel or approximately parallel to the end face of the composite cell provided with the tabs. In this way, on the premise that the capacity of the battery is constant, the length of the battery can be reduced to reduce the space occupied by the battery in the electronic device. On the premise that the length of the battery is constant, the capacity of the battery can be increased, thereby prolonging the battery life of the battery.

In a possible implementation of the first aspect, the battery may further include a third cell, a fourth cell, a fifth cell, and the like. The third cell, the fourth cell, the fifth cell, and the like are different from the first cell, and the third cell, the fourth cell, the fifth cell, and the like are also different from the second cell. In this way, the battery can have three or more different characteristics. The third cell, the fourth cell, the fifth cell, and the like may or not share a shell and an electrolyte with the first cell and the second cell.

According to a second aspect, the invention provides an electronic device. The electronic device includes a housing, a power management module, a charging management module, and the battery according to any one of the foregoing technical solutions. A battery compartment is provided in the housing. The power management module and the charging management module are disposed in the housing. The battery is mounted in the battery compartment, and the battery is electrically connected to the power management module and the charging management module.

Because the electronic device provided in the embodiments of this application includes the battery according to any one of the foregoing technical solutions, they can solve the same technical problem and achieve the same effect.

### BRIEF DESCRIPTION OF DRAWINGS

FIG. 1 is a perspective view of an electronic device according to some embodiments of this application;
FIG. 2 is an exploded view of the electronic device shown in FIG. 1;
FIG. 3 is a perspective view of a battery according to some embodiments of this application;
FIG. 4 is an exploded view of the battery shown in FIG. 3;
FIG. 5 is an exploded view of a cell in the battery shown in FIG. 4;
FIG. 6 is a schematic structural diagram of a battery according to some other embodiments of this application;
FIG. 7 is a schematic structural diagram of a battery according to some other embodiments of this application;
FIG. 8 is an exploded view of the battery shown in FIG. 7;
FIG. 9 is a schematic structural diagram of composition of a first cell in the battery shown in FIG. 8;
FIG. 10 is a schematic structural diagram of a first bare cell in the first cell shown in FIG. 9;
FIG. 11 is a schematic structural diagram of a cross section, along line a-a, of the first bare cell shown in FIG. 10;
FIG. 12 is another schematic structural diagram of a cross section, along line a-a, of the first bare cell shown in FIG. 10;
FIG. 13a is another schematic structural diagram of a first bare cell in the first cell shown in FIG. 9;
FIG. 13b is a schematic structural diagram of the first bare cell shown in FIG. 13a when viewed in a direction A;
FIG. 14 is a schematic structural diagram of a positive electrode plate, in an unfolded state, of the first bare cell shown in FIG. 13a;
FIG. 15 is another schematic structural diagram of a positive electrode plate, in an unfolded state, of the first bare cell shown in FIG. 13a;
FIG. 16 is another schematic structural diagram of a first bare cell in the first cell shown in FIG. 9;
FIG. 17 is a schematic structural diagram of a positive electrode plate, in an unfolded state, of the first bare cell shown in FIG. 16;
FIG. 18 is another schematic structural diagram of a positive electrode plate, in an unfolded state, of the first bare cell shown in FIG. 16;
FIG. 19 is a schematic structural diagram of composition of a second cell in the battery shown in FIG. 8;
FIG. 20 is a schematic structural diagram of a battery according to some other embodiments of this application;
FIG. 21 is a schematic structural diagram of a battery according to some other embodiments of this application;
FIG. 22 is an exploded view of the battery shown in FIG. 21;
FIG. 23 is a schematic structural diagram of a composite cell in the battery shown in FIG. 21;
FIG. 24 is a schematic structural diagram of composition of the composite cell shown in FIG. 23;
FIG. 25 is another schematic structural diagram of composition of a composite cell in the battery shown in FIG. 21;
FIG. 26 is another schematic structural diagram of composition of the composite cell shown in FIG. 23;
FIG. 27 is another schematic structural diagram of a composite cell in the battery shown in FIG. 21;
FIG. 28 is a schematic structural diagram of composition of the composite cell shown in FIG. 27;
FIG. 29 is another schematic structural diagram of composition of the composite cell shown in FIG. 27;
FIG. 30 is another schematic structural diagram of composition of the composite cell shown in FIG. 27;
FIG. 31 is a schematic diagram of a processing process of a composite cell according to some embodiments of this application;
FIG. 32 is a schematic diagram of a processing process of a composite cell according to some other embodiments of this application;
FIG. 33 is an exploded view of a battery according to some other embodiments of this application;
FIG. 34 is a schematic structural diagram of a composite cell according to some other embodiments of this application;
FIG. 35 is a schematic structural diagram of composition of the composite cell shown in FIG. 34;
FIG. 36 is a schematic diagram of a processing process of a composite cell according to some other embodiments of this application;
FIG. 37 is an exploded view of a composite cell according to some other embodiments of this application;
FIG. 38 is a schematic structural diagram of a composite cell according to some other embodiments of this application;
FIG. 39 is an exploded view of the composite cell shown in FIG. 38;
FIG. 40 is a schematic structural diagram of a composite cell according to some other embodiments of this application;
FIG. 41 is an exploded view of the composite cell shown in FIG. 40;
FIG. 42 is a schematic structural diagram of a composite cell according to some other embodiments of this application;
FIG. 43 is an exploded view of the composite cell shown in FIG. 42;
FIG. 44 is a schematic structural diagram of a protection board and the composite cell shown in FIG. 38;
FIG. 45 is a schematic structural diagram of a battery according to some other embodiments of this application;
FIG. 46 is a schematic diagram of a process of packaging the composite cell shown in FIG. 42 into the battery shown in FIG. 45; and
FIG. 47 is a schematic structural diagram of composition of a composite cell according to some other embodiments of this application.

### DESCRIPTION OF EMBODIMENTS

In the embodiments of this application, the terms "first", "second", and "third" are merely intended for a purpose of description, and shall not be understood as an indication or implication of relative importance or an implicit indication of a quantity of the indicated technical features. Therefore, a feature defined by "first", "second", or "third" may explicitly or implicitly include one or more features.

In the embodiments of this application, the term "comprise", "include", or any of their variants are intended to cover a non-exclusive inclusion, so that a process, a method, an article, or an apparatus that includes a series of elements not only includes those elements but also includes other elements that are not expressly listed, or further includes elements inherent to such process, method, article, or apparatus. In the absence of more restrictions, an element defined by the statement "including a ..." does not exclude another same element in a process, a method, an article, or an apparatus that includes the element.

In the embodiments of this application, "and/or" describes only an association relationship for describing associated objects and represents that three relationships may exist. For example, A and/or B may represent the following three cases: A alone, both A and B, and B alone. In addition, the character "/" in this specification generally indicates an "or" relationship between the associated objects.

This application relates to a battery and an electronic device. In order to facilitate the description of the following embodiments, some technical terms to be mentioned in the embodiments of this application are first described before the embodiments of this application are described. Details are as follows:

Battery shell: a part of a battery for packaging and protecting a bare cell, where the shell includes, but is not limited to, a steel shell and an aluminum-plastic film.

Aluminum-plastic film: also referred to as an aluminum-plastic packaging film, including at least three layers of materials. A middle layer is an aluminum layer, which acts as a moisture barrier. An outer layer is a nylon (nylon) adhesive layer, which prevents the permeation of air, especially oxygen. An inner layer is a polypropylene (polypropylene, PP) layer, which seals and prevents an electrolyte from corroding the aluminum layer. The inner layer of the aluminum-plastic film is in contact with the electrolyte.

Electrolyte: present in voids of a bare cell inside the shell as a carrier for transporting lithium ions in the battery. The electrolyte is generally prepared from a high-purity organic solvent, electrolyte lithium salt, a necessary additive, and other raw materials according to a specific proportion under specific conditions.

Bare cell: including a positive electrode plate, a negative electrode plate, and a separator. The positive electrode plate and the negative electrode plate each include a current collector and an electrode material applied onto the current collector. A current collector of the positive electrode plate is usually aluminum foil. A current collector of the negative electrode plate is usually copper foil. The separator, also referred to as a membrane separator, is located between the positive electrode plate and the negative electrode plate, so as to separate the positive electrode plate and the negative electrode plate of the bare cell and prevent a short circuit due to the two electrode plates being in direct contact. The material of the separator is usually a polyolefin porous membrane.

Wound bare cell: formed by stacking and then winding four layers of materials, namely, a positive electrode plate, a separator, a negative electrode plate, and a separator.

Stacked bare cell: including positive electrode plates and negative electrode plates that are alternately stacked together in sequence, with a separator provided between a positive electrode plate and a negative electrode plate that are adjacent. The positive electrode plate and the negative electrode plate each include a current collector and an electrode material applied onto the current collector. A current collector of the positive electrode plate is usually aluminum foil. A current collector of the negative electrode plate is usually copper foil. The separator is used to separate the positive electrode plate and the negative electrode plate and prevent a short circuit due to the two electrode plates being in direct contact. The separator may be a separator bag, a separator folded in a zigzag shape, or a plurality of single separators. This application does not limit the specific structure of the separator in the stacked bare cell, as long as the separator can insulate and separate the positive electrode plate from the negative electrode plate. The material of the separator is usually a polyolefin porous membrane. Compared with the wound bare cell, the stacked bare cell has a stronger fast charging capability and greater flexibility in shape and tab position design.

Tab: used to lead an electrode of the bare cell to the outside of the shell. Specifically, a tab used to lead out the positive electrode of the bare cell is a positive electrode tab, and a tab used to lead out the negative electrode of the bare cell is a negative electrode tab. One bare cell includes at least one positive electrode tab and at least one negative electrode tab. The positive electrode tab may be connected to the current collector of the positive electrode plate in the bare cell by welding, or may be directly extended from the current collector of the positive electrode plate. Similarly, the negative electrode tab may be connected to the current collector of the negative electrode plate in the bare cell by welding, or may be directly extended from the current collector of the negative electrode plate. The positive electrode tab is usually an aluminum strip. The negative electrode tab is usually a nickel strip. Specifically, structural forms of the positive electrode tab and the negative electrode tab are described in detail in conjunction with the accompanying drawings in the following embodiments, and details are not described here. In order to avoid a short circuit between a tab and a metal layer in the shell (such as the aluminum layer in the aluminum-plastic film), a part of the tab that passes through the shell is usually covered with a tab adhesive to provide insulation and isolation.

Cell: a structure obtained by packaging the bare cell with the shell and filling in the electrolyte.

Protection board: usually a circuit board integrated with a sampling resistor and a current fuse, which is used to avoid situations such as overcharge, overdischarge, overcurrent, short circuit, and ultra-high temperature charge and discharge of the battery.

Battery packaging: a process of combining the cell, the protection board, and other accessories to make a complete battery.

Rate (also referred to as C-rate): used to indicate the magnitude of a current at which the battery is charged and discharged. 1C represents a corresponding current strength value when the battery is fully discharged in one hour. 0.2C represents a corresponding current strength value when the battery is fully discharged in five hours, where 0.2 = 1/(5 hours).

High-energy battery/cell/bare cell: specifically a battery/cell/bare cell whose volumetric energy density is not lower than a first preset threshold. The first preset threshold includes, but is not limited to, 500 Wh/L, 510 Wh/L, 520 Wh/L, 540 Wh/L, 550 Wh/L, 580 Wh/L, or 600 Wh/L.

Fast-charging battery/cell/bare cell: specifically a battery/cell/bare cell that can implement a charging and discharging process at a rate (C-rate) not lower than a second preset threshold. The second preset threshold includes, but is not limited to, 1C, 2C, 2.5C, 3C, 4C, or 4.5C.

High-temperature-resistant battery/cell/bare cell: specifically a battery/cell/bare cell that can work properly for a long time in an environment at a temperature not lower than a third preset threshold. The third preset threshold includes, but is not limited to, 40°C, 45°C, 50°C, 55°C, 60°C, 70°C, or 80°C.

Low-temperature-resistant battery/cell/bare cell: specifically a battery/cell/bare cell that can work properly for a long time in an environment at a temperature not higher than a fourth preset threshold. The fourth preset threshold includes, but is not limited to, 20°C, 15°C, 10°C, 9°C, 8°C, 7°C, or 6°C.

Long-life battery/cell/bare cell: specifically a battery/cell/bare cell that can retain at least 80% of an initial capacity even when the number of charge/discharge cycles is greater than a fifth preset threshold. The fifth preset threshold includes, but is not limited to, 600 cycles, 650 cycles, 700 cycles, 750 cycles, 800 cycles, 900 cycles, 1000 cycles, or 1500 cycles.

This application provides an electronic device. The electronic device is a type of electronic device that includes a battery. Specifically, the electronic device includes, but is not limited to, a mobile phone, a tablet personal computer (tablet personal computer), a laptop computer (laptop computer), a personal digital assistant (personal digital assistant, PDA), a personal computer, a notebook computer (Notebook), a vehicle-mounted device, and a wearable device.

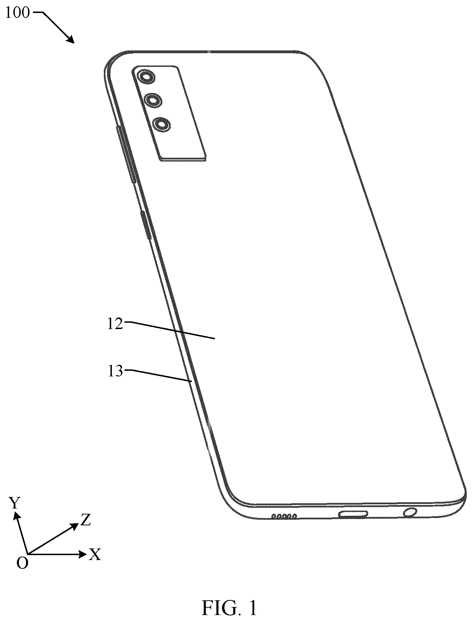

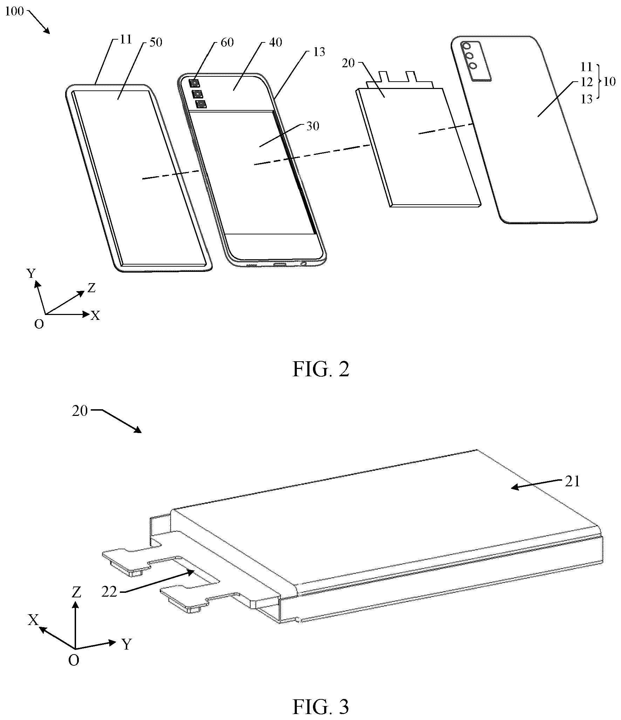

Referring to FIG. 1 and FIG. 2, FIG. 1 is a perspective view of an electronic device 100 according to some embodiments of this application, and FIG. 2 is an exploded view of the electronic device 100 shown in FIG. 1. In this embodiment, the electronic device 100 is a mobile phone. Specifically, the electronic device 100 includes a housing 10, an electrical component, a charging management module, a power management module, and a battery 20.

It can be understood that, FIG. 1 and FIG. 2 and the following related accompanying drawings only schematically show some components included in the electronic device 100, and the actual shape, actual size, actual position, and actual structure of these components are not limited by FIG. 1 and FIG. 2 and the following accompanying drawings. Moreover, in order to facilitate the description of the following embodiments, an XYZ coordinate system is established. Specifically, a width direction of the electronic device 100 is defined as an X-axis direction, a length direction of the electronic device 100 is defined as a Y-axis direction, and a thickness direction of the electronic device 100 is defined as a Z-axis direction. It can be understood that the coordinate system of the electronic device 100 may be flexibly set according to actual needs, which is not specifically limited here.

The housing 10 includes a light-transmitting cover plate 11, a back cover 12, and a frame 13. A material of the light-transmitting cover plate 11 includes, but is not limited to, glass and plastic. The light-transmitting cover plate 11 and the back cover 12 are stacked and spaced apart. A material of the frame 13 and the back cover 12 includes, but is not limited to, metal and plastic. The frame 13 is located between the light-transmitting cover plate 11 and the back cover 12, and the frame 13 is secured to the back cover 12. For example, the frame 13 may be securely connected to the back cover 12 by using an adhesive. Alternatively, the frame 13 may be integrally formed with the back cover 12, that is, the frame 13 and the back cover 12 are an integral structure. The light-transmitting cover plate 11 is secured to the frame 13. In some embodiments, the light-transmitting cover plate 11 may be secured to the frame 13 by using an adhesive. The light-transmitting cover plate 11, the back cover 12, and the frame 13 enclose an internal accommodation space of the electronic device 100. The inner accommodation space accommodates the electrical component, the charging management module, the power management module, and the battery 20 therein.

A battery compartment 30 is provided in the housing 10. The battery compartment 30 is configured to accommodate the battery 20. In some embodiments, referring to FIG. 2, the electronic device 100 further includes a middle plate 40. The middle plate 40 is located in the inner accommodation space of the electronic device 100 and secured around to an inner surface of the frame 13. For example, the middle plate 40 may be secured to the frame 13 by welding, or may be integrally formed with the frame 13. The middle plate 40 is used as a support "skeleton" in the electronic device 100 to support a camera module 60 (refer to FIG. 2), a main board, a sub-board, a speaker module, and other components. A material of the middle plate 40 includes, but is not limited to, metal and plastic. In order to ensure the support performance of the middle plate 40, optionally, the material of the middle plate 40 is metal. Specifically, the metal includes, but is not limited to, stainless steel, magnesium-aluminum alloy, or aluminum alloy. The battery compartment 30 is a recess provided on a surface of the middle plate 40 facing the back cover 12. In some other embodiments, the middle plate 40 constitutes a bottom wall of the battery compartment, and electronic components such as the main board, the speaker module, and the sub-board are disposed in an accommodation space between the middle plate 40 and the back cover 12. These electronic components form two opposite side walls of the battery compartment 30 arranged in the Y-axis direction. Two sides of the frame 13 extending along the Y-axis direction respectively form the other two opposite side walls of the battery compartment 30 arranged in the X-axis direction. In still some other embodiments, the middle plate 40 may not be provided in the electronic device 100, but a display 50 in FIG. 2 is used to form the bottom wall of the battery compartment 30, and the main board, the speaker module, the sub-board, and the frame 13 form the side walls of the battery compartment 30. This is not specifically limited herein.

The battery 20 is mounted in the battery compartment 30, and the battery 20 is configured to provide power for the electrical components in the electronic device 100. Specifically, the electrical components include, but are not limited to, one or more of the display 50 (refer to FIG. 2), the camera module 60, the main board, the sub-board, the speaker module, or a fingerprint recognition module, which are not specifically limited herein.

The power management module is electrically connected between the battery 20 and the electrical components. The power management module is configured to receive an input from the battery 20 and discharge the battery to the electrical components to provide power for the electrical components. The power management module may be further configured to monitor parameters such as a capacity, a number of charge/discharge cycles, and a state of health (leakage of electricity and impedance) of the battery 20.

The charging management module is electrically connected between the charger and the battery 20. The charging management module is configured to receive a charging input from the charger. The charger may be a wireless charger or a wired charger. In some embodiments of wired charging, the charging management module may receive a charging input from a wired charger through a universal serial bus (universal serial bus, USB) interface. In some embodiments of wireless charging, the charging management module may receive a wireless charging input through a wireless charging coil of the electronic device. The power management module and the charging management module may be integrated as a whole, or may be separately provided, which is not specifically limited herein.

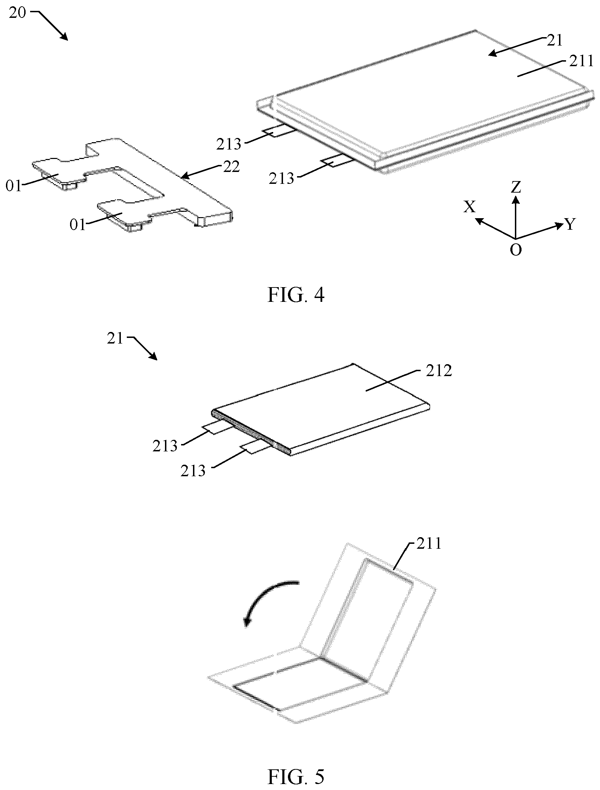

Referring to FIG. 3 and FIG. 4, FIG. 3 is a perspective view of a battery 20 according to some embodiments of this application, and FIG. 4 is an exploded view of the battery 20 shown in FIG. 3. In this embodiment, the battery 20 is a lithium-ion battery. The battery 20 includes a cell 21 and a protection board 22.

Referring to FIG. 5, FIG. 5 is an exploded view of a cell 21 in the battery 20 shown in FIG. 4. The cell 21 includes a shell 211 and a bare cell 212.

An electrolyte is packaged in the shell 211. The bare cell 212 is located in the shell 211 and infiltrated in the electrolyte. The bare cell 212 has at least two tabs 213. Here, "at least two" means two or more. The at least two tabs 213 include a positive electrode tab and a negative electrode tab. One end of the tab 213 is electrically connected to the bare cell 212, and the other end of the tab 213 extends out of the shell 211 through the shell 211. Referring back to FIG. 4, the protection board 22 is disposed outside the shell 211, and the protection board 22 is electrically connected to a part of the tab 213 located outside the shell 211. The protection board 22 has a charging and discharging port 01, and the charging and discharging port 01 has a positive electrode terminal and a negative electrode terminal. The positive electrode terminal is connected to the positive electrode tab, and the negative electrode terminal is connected to the negative electrode tab. The charging and discharging port 01 is electrically connected to the foregoing power management module, charging management module, and charger through the positive electrode terminal and the negative electrode terminal, so as to implement charging and discharging management and detection of the parameters such as the capacity, the number of cycles, and the state of health.

The battery 20 shown in FIG. 3 to FIG. 5 includes only one cell, and the single cell has only one characteristic, which makes it difficult to meet requirements in multiple use scenarios. Moreover, the battery 20 has a single charging and discharging link and cannot withstand high-current charging.

It should be noted that, the number of cells described in the embodiments of this application is determined according to the number of bare cells included in the battery 20. The battery 20 shown in FIG. 3 to FIG. 5 has only one bare cell, that is, the battery 20 includes one cell. In the embodiments shown later, the battery 20 includes two, three, four, five or more bare cells. Correspondingly, the battery 20 includes two, three, four, five or more cells.

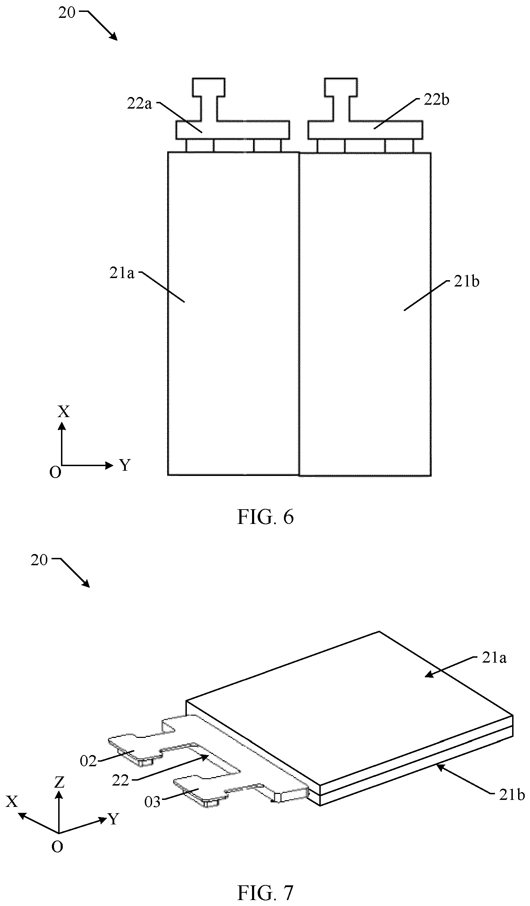

Referring to FIG. 6, FIG. 6 is a schematic structural diagram of a battery 20 according to some other embodiments of this application. In this embodiment, the battery 20 is a dual-cell battery. Specifically, the battery 20 includes a first cell 21a, a second cell 21b, and two protection boards (namely, a protection board 22a and a protection board 22b). The first cell 21a and the second cell 21b each include a shell, an electrolyte, and a bare cell. The bare cell has at least two tabs, and the at least two tabs include a positive electrode tab and a negative electrode tab. The first cell 21a and the second cell 21b are the same cells. To be specific, the shell, electrolyte, bare cell, and a shape, size, material, and relative position of the tabs of the bare cell of the first cell 21a are all the same as those of the second cell 21b. The dual-cell battery is charged through both the tabs of the bare cell in the first cell 21a and the tabs of the bare cell in the second cell 21b, and therefore can withstand high-current charging, so that a charging speed can be improved to some extent. However, because the first cell 21a and the second cell 21b are the same cells, the first cell 21a and the second cell 21b have the same characteristics, which still cannot meet the requirements in the multiple use scenarios. Moreover, because the battery 20 shown in this embodiment includes two shells (respectively belonging to two cells), when a volume of the battery 20 is constant, the shells occupy a relatively large volume, energy density of the battery is relatively small, and a space utilization rate of the device is relatively low.

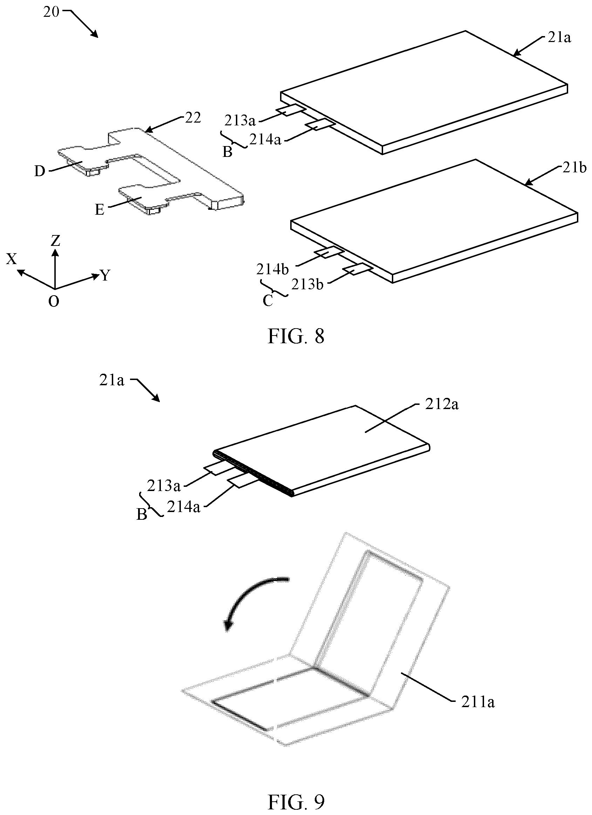

Different from the battery 20 described in the foregoing embodiments, to enable the battery 20 to meet the requirements in the multiple use scenarios, in some embodiments, referring to FIG. 7 and FIG. 8, FIG. 7 is a schematic structural diagram of a battery 20 according to some other embodiments of this application, and FIG. 8 is an exploded view of the battery 20 shown in FIG. 7. In this embodiment, the battery 20 is a dual-cell battery. Specifically, the battery 20 includes a first cell 21a, a second cell 21b, and a protection board 22. The first cell 21a is different from the second cell 21b. Specifically, the difference between the first cell 21a and the second cell 21b may be reflected in at least one of electrochemical characteristics, structure, or size.

In this way, the battery 20 is a composite of two different cells, so that the battery 20 has at least two different characteristics. The characteristics of the cell include, but are not limited to, characteristics in volumetric energy density, gravimetric energy density, life, charging capability, high and low temperature resistance, safety, and the like. Therefore, use requirements in at least two scenarios can be met.

On the basis of the foregoing embodiment, in some embodiments, the first cell 21a is one of a high-energy cell, a fast-charging cell, a high-temperature-resistant cell, a low-temperature-resistant cell, and a long-life cell; and the second cell 21b is another of a high-energy cell, a fast-charging cell, a high-temperature-resistant cell, a low-temperature-resistant cell, and a long-life cell. Therefore, a composite battery having two characteristics, such as a high-energy fast-charging battery, a fast-charging high-temperature-resistant battery, a high-energy low-temperature-resistant battery, a high-energy long-life battery, or a high-temperature-resistant long-life battery, can be formed, so that the battery meets requirements in two use scenarios.

Referring to FIG. 9, FIG. 9 is a schematic structural diagram of composition of a first cell 21a in the battery 20 shown in FIG. 8. The first cell 21a includes a first shell 211a and a first bare cell 212a.

A first electrolyte is packaged in the first shell 211a.

The first bare cell 212a is disposed in the first shell 211a and infiltrated in the first electrolyte. The first bare cell 212a may be a wound bare cell or a stacked bare cell. A shape of the first bare cell 212a may be a rectangular parallelepiped, a cube, a cylinder, or another special-shaped body.

The first bare cell 212a has a first tab 213a and a second tab 214a. One end of the first tab 213a of the first bare cell is electrically connected to the first bare cell 212a, and the other end thereof extends out of the first shell 211a through the first shell 211a. One end of the second tab 214a of the first bare cell is electrically connected to the first bare cell 212a, and the other end thereof extends out of the first shell 211a through the first shell 211a.

The first tab 213a of the first bare cell is a positive electrode tab, and the second tab 214a of the first bare cell is a negative electrode tab. Alternatively, the first tab 213a of the first bare cell is a negative electrode tab, and the second tab 214a of the first bare cell is a positive electrode tab. The first tab 213a of the first bare cell and the second tab 214a of the first bare cell form a first charging and discharging port B.

For first bare cells 212a in different structural forms, first tabs 213a also have different structures.

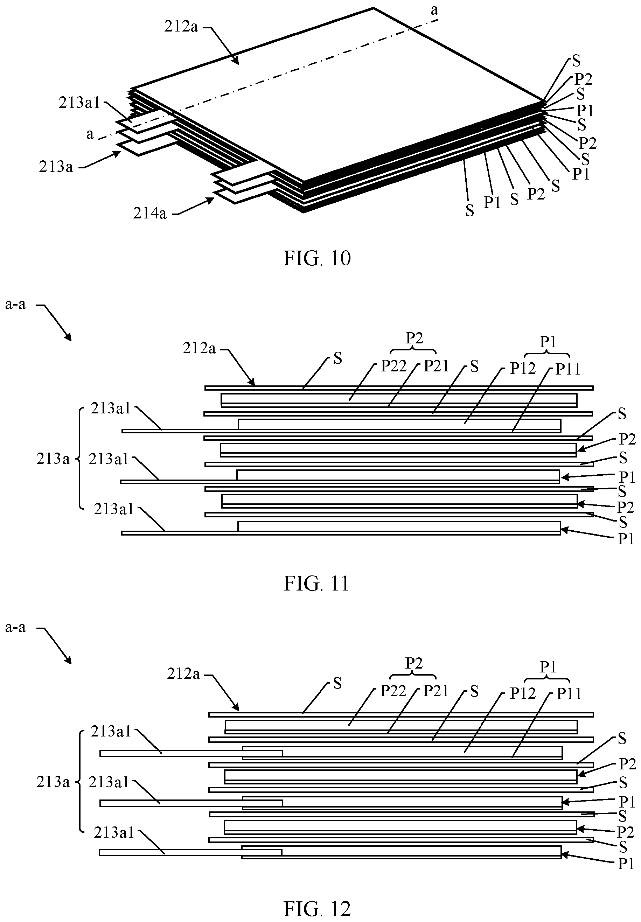

Specifically, when the first bare cell 212a is a stacked bare cell, in some embodiments, refer to FIG. 10 and FIG. 11. FIG. 10 is a schematic structural diagram of the first bare cell 212a in the first cell 21a shown in FIG. 9, and FIG. 11 is a schematic structural diagram of a cross section, along line a-a, of the first bare cell 212a shown in FIG. 10. In this embodiment, the first bare cell 212a is a stacked bare cell. The first bare cell 212a includes positive electrode plates P1 and negative electrode plates P2 that are alternately stacked in sequence, with a separator S provided between a positive electrode plate P1 and a negative electrode plate P2 that are adjacent. The positive electrode plate P1 includes a positive electrode current collector P11 and a positive electrode material P12. The positive electrode material P12 may be provided on one surface of the positive electrode current collector P11, or may be provided on two opposite surfaces of the positive electrode current collector P11. FIG. 11 only shows an example in which the positive electrode material P12 is provided on one surface of the positive electrode current collector P11, which should not be considered as a special limitation on this application. The negative electrode plate P2 includes a negative electrode current collector P21 and a negative electrode material P22. The negative electrode material P22 may be provided on one surface of the negative electrode current collector P21, or may be provided on two opposite surfaces of the negative electrode current collector P21. FIG. 11 only shows an example in which the negative electrode material P22 is provided on one surface of the negative electrode current collector P21, which should not be considered as a special limitation on this application. The first tab 213a is configured to lead out a current from the positive electrode plate P1. Specifically, tab structures 213a1 are electrically connected to the positive electrode current collectors P11 of the plurality of positive electrode plates P1. The tab structure 213a1 may be secured to the positive electrode current collector P11 by welding, pressing, or the like, or may be directly extended from the positive electrode current collector P11. FIG. 11 only shows an example in which the tab structure 213a1 is directly extended from the positive electrode current collector P11, which should not be considered as a special limitation on this application. In some other embodiments, referring to FIG. 12, FIG. 12 is another schematic structural diagram of a cross section, along line a-a, of the first bare cell 212a shown in FIG. 10. In this embodiment, the tab structure 213a1 is independent of the positive electrode current collector P11, and the tab structure 213a1 is secured to the positive electrode current collector P11 by welding or pressing. A plurality of tab structures 213a1 are stacked and secured together to form the first tab 213a. Alternatively, the plurality of tab structures 213a1 are stacked and secured together, and are connected to an adapting metal body, and the plurality of tab structures 213a1 and the adapting metal body together form the first tab 213a.

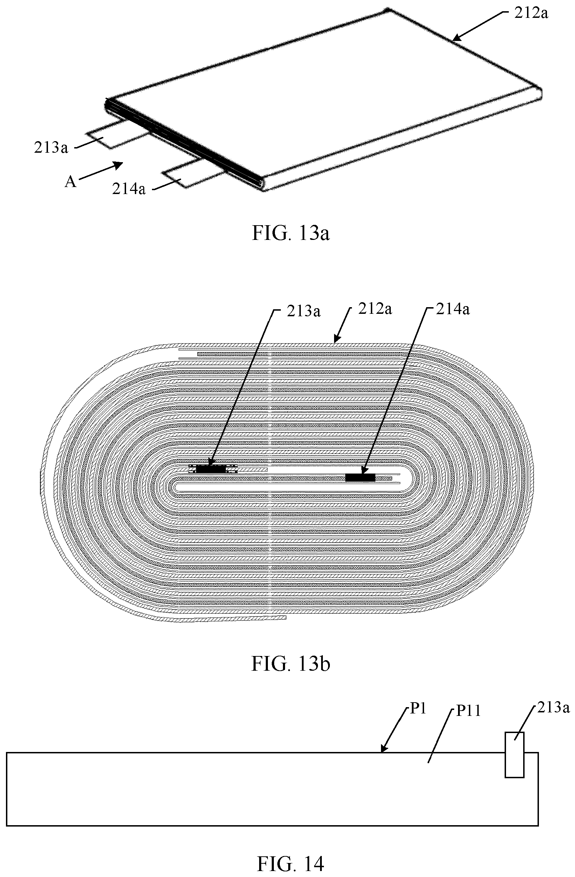

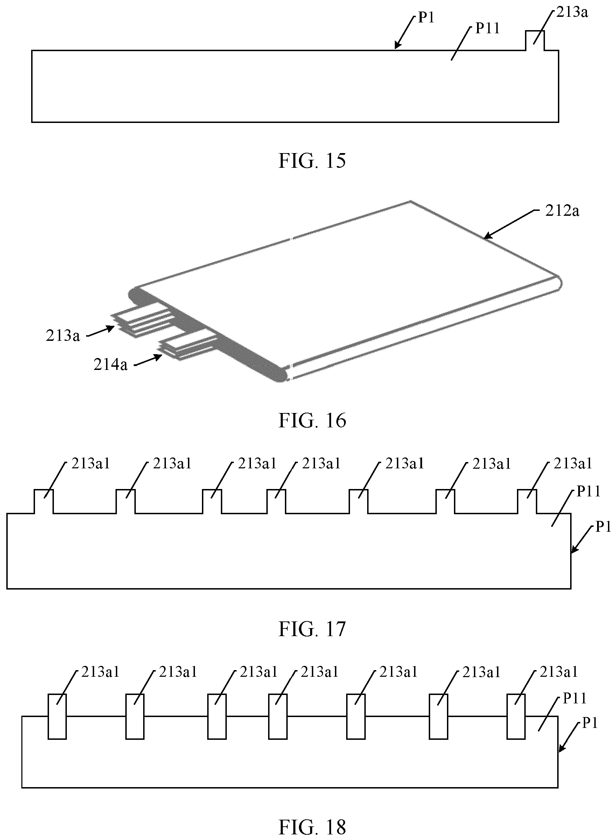

When the first bare cell 212a is a wound bare cell, in some embodiments, refer to FIG. 13a. FIG. 13a is another schematic structural diagram of a first bare cell 212a in the first cell 21a shown in FIG. 9. FIG. 13b is a schematic structural diagram of the first bare cell 212a shown in FIG. 13a when viewed in a direction A. In this embodiment, the first bare cell 212a is a wound bare cell. Referring to FIG. 14, FIG. 14 is a schematic structural diagram of a positive electrode plate P1, in an unfolded state, of the first bare cell 212a shown in FIG. 13a. In this embodiment, the first tab 213a is secured to the positive electrode current collector P11 of the positive electrode plate P1 by pressing, welding, or the like. In some other embodiments, referring to FIG. 15, FIG. 15 is another schematic structural diagram of a positive electrode plate P1, in an unfolded state, of the first bare cell 212a shown in FIG. 13a. In this embodiment, the first tab 213a is directly extended from the positive electrode current collector P11 of the positive electrode plate P1.

Referring to FIG. 16, FIG. 16 is another schematic structural diagram of a first bare cell 212a in the first cell 21a shown in FIG. 9. In this embodiment, the first bare cell 212a is a wound bare cell. Referring to FIG. 17, FIG. 17 is a schematic structural diagram of a positive electrode plate P1, in an unfolded state, of the first bare cell 212a shown in FIG. 16. In this embodiment, the positive electrode current collector P11 of the positive electrode plate P1 is provided with a plurality of tab structures 213a1 that are spaced apart. The plurality of tab structures 213a1 may be secured to the positive electrode current collector P11 by welding, pressing, or the like, or may be directly extended from the positive electrode current collector P11. FIG. 17 only shows an example in which the tab structure 213a1 is directly extended from the positive electrode current collector P11, which should not be considered as a special limitation on this application. In some other embodiments, referring to FIG. 18, FIG. 18 is another schematic structural diagram of a positive electrode plate P1, in an unfolded state, of the first bare cell 212a shown in FIG. 16. In this embodiment, the plurality of tab structures 213a1 are independent of the positive electrode current collector P11, and the tab structure 213a1 is secured to the positive electrode current collector P11 by welding or pressing. When the positive electrode plate P1, the negative electrode plate, and the separator are wound to form the bare cell shown in FIG. 16, the plurality of tab structures 213a1 are stacked. The plurality of stacked tab structures 213a1 are secured together to form the first tab 213a. Alternatively, the plurality of tab structures 213a1 are secured together, and are connected to an adapting metal body, and the plurality of tab structures 213a1 and the adapting metal body together form the first tab 213a.

It should be noted that the foregoing structure of the first tab 213a is described on the basis that the first tab 213a is a positive electrode tab, which does not mean that this application limits the first tab 213a to a positive electrode tab. According to the foregoing description, the first tab 213a may also be a negative electrode tab. When the first tab 213a is a negative electrode tab, the first tab 213a is electrically connected to the negative electrode current collector of the negative electrode plate, or is extended from the negative electrode current collector. On this basis, it can be understood that the structural forms of the second tab 214a and the tabs mentioned below may be implemented for bare cells of different structural forms with reference to the structure of the first tab 213a, and details are not described in this embodiment and the following embodiments.

It can be understood that, in addition to the first tab 213a and the second tab 214a, the first bare cell 212a may further have a third tab, a fourth tab, and the like. The third tab and the fourth tab each are a positive electrode tab or a negative electrode tab. As the number of tabs increases, the number of charging and discharging links of the first bare cell 212a also increases. When a plurality of charging and discharging links are used to charge and discharge at the same time, high-current charging can be implemented, and an overall temperature rise of the tabs and the cell can be reduced, which can not only improve the charging speed of the first bare cell 212a, but also improve thermal safety performance of the battery. However, as the number of tabs increases, the structural complexity of the first bare cell 212a also increases, and a circuit structure of the protection board 22 also becomes increasingly complex. Therefore, in the embodiments of this application, the three aspects of the charging speed, the thermal safety performance, and the structural complexity can be comprehensively considered, so as to set a reasonable number of tabs for different application scenarios, and focus on optimizing the charging speed and the thermal safety performance, and simplifying the structural complexity, or take into account the charging speed, the thermal safety performance, and the structural complexity at the same time. It should be noted that, FIG. 9, FIG. 10, FIG. 13a, FIG. 16, and the accompanying drawings in the following embodiments are described only by using examples in which the first bare cell 212a has only the first tab 213a and the second tab 214a, which should not be considered as a special limitation on this application.

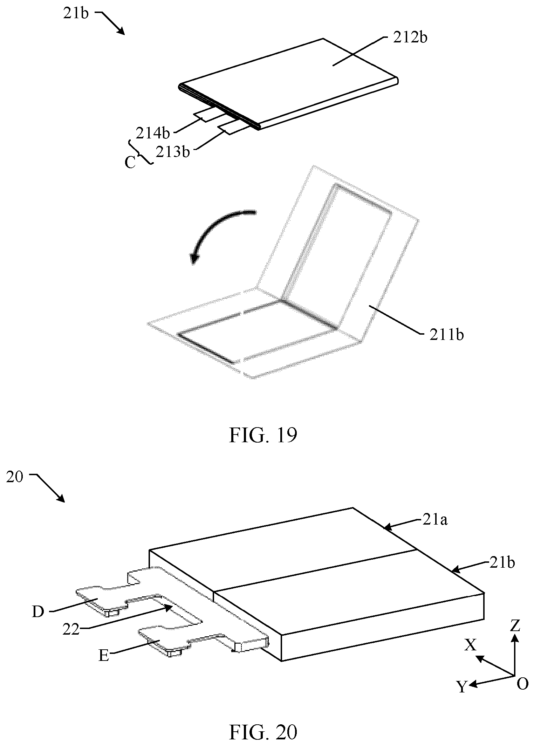

Referring to FIG. 19, FIG. 19 is a schematic structural diagram of composition of a second cell 21b in the battery 20 shown in FIG. 8. The second cell 21b includes a second shell 211b and a second bare cell 212b.

A second electrolyte is packaged in the second shell 211b.

The second bare cell 212b is disposed in the second shell 211b and infiltrated in the first electrolyte. The second bare cell 212b may be a wound bare cell or a stacked bare cell. FIG. 19 only shows an example in which the second bare cell 212b is a wound bare cell, which should not be considered as a special limitation on this application. A shape of the second bare cell 212b may be a rectangular parallelepiped, a cube, a cylinder, or another special-shaped body.

The second bare cell 212b has a first tab 213b and a second tab 214b. One end of the first tab 213b of the second bare cell is electrically connected to the second bare cell 212b, and the other end thereof extends out of the second shell 211b through the second shell 211b. One end of the second tab 214b of the second bare cell is electrically connected to the second bare cell 212b, and the other end thereof extends out of the second shell 211b through the second shell 211b.

The first tab 213b of the second bare cell is a positive electrode tab, and the second tab 214b of the second bare cell is a negative electrode tab. Alternatively, the first tab 213b of the second bare cell is a negative electrode tab, and the second tab 214b of the second bare cell is a positive electrode tab. The first tab 213b of the second bare cell and the second tab 214b of the second bare cell form a second charging and discharging port C.

It can be understood that, in addition to the first tab 213b and the second tab 214b, the second bare cell 212b may further have a third tab, a fourth tab, and the like. The third tab and the fourth tab each are a positive electrode tab or a negative electrode tab. As the number of tabs increases, the number of charging and discharging links of the second bare cell 212b also increases. When a plurality of charging and discharging links are used to charge and discharge at the same time, high-current charging can be implemented, and an overall temperature rise of the tabs and the cell can be reduced, which can not only improve the charging speed of the second bare cell 212b, but also improve thermal safety performance of the battery. However, as the number of tabs increases, the structural complexity of the second bare cell 212b also increases, and a circuit structure of the protection board 22 also becomes increasingly complex. Therefore, in the embodiments of this application, the three aspects of the charging speed, the thermal safety performance, and the structural complexity can be comprehensively considered, so as to set a reasonable number of tabs for different application scenarios, and focus on optimizing the charging speed and the thermal safety performance, and simplifying the structural complexity, or take into account the charging speed, the thermal safety performance, and the structural complexity at the same time. It should be noted that, FIG. 19 and the accompanying drawings in the following embodiments are described only by using examples in which the second bare cell 212b has only the first tab 213b and the second tab 214b, which should not be considered as a special limitation on this application.

The first cell 21a shown in FIG. 9 and the second cell 21b shown in FIG. 19 may share a shell and an electrolyte, or may not share a shell and an electrolyte, which are not specifically limited herein. FIG. 7 and FIG. 8 only show an example in which the first cell 21a and the second cell 21b do not share the shell and the electrolyte. To be specific, the first shell 211a and the second shell 211b are different shells, electrolytes are respectively packaged in the shell 211a and the second shell 211b, and the first bare cell 212a and the second bare cell 212b are respectively infiltrated in the electrolytes in the first shell 211a and the second shell 211b, which should not be considered as a special limitation on this application.

When the first cell 21a and the second cell 21b do not share the shell and the electrolyte, in order to make the first cell 21a and the second cell 21b have different characteristics, the following three implementations may be used.

### Implementation 1

The first bare cell 212a is the same as the second bare cell 212b, and the first electrolyte and the second electrolyte are different electrolytes.

It should be noted that the first bare cell 212a is the same as the second bare cell 212b, specifically in a plurality of aspects such as the shape, size, process, structure, and material system thereof. The same shape refers to the same shape of appearance. The same size is mainly reflected in the same length, width, and height of the bare cells, as well as the same volume occupied by the three-dimensional space. The same process is mainly reflected in the same manufacturing and processing methods of the bare cells. For example, the bare cells are both wound or stacked. The same structure means that the bare cells are the same in a plurality of aspects such as the number of tabs, positions of the tabs, winding methods of the bare cells, and stacking methods of the bare cells. The same material system means that the bare cells are the same in a plurality of aspects such as an electrode material type, a current collector type and thickness, a coating weight of the electrode material, compacted density of the electrode material, a length difference and width difference between the electrode plate and the separator, and a length difference and width difference between the electrode plates.

In addition, the first electrolyte is different from the second electrolyte, specifically in at least one of their components and a mass percentage (or volume percentage) of each component.

According to the foregoing description, in implementation 1, different electrolytes are provided such that the first cell 21a and the second cell 21b have different characteristics. On this basis, because the first bare cell 212a and the second bare cell 212b are the same, the structural complexity of the battery 20 can be reduced.

### Implementation 2

The first bare cell 212a is different from the second bare cell 212b, and the first electrolyte and the second electrolyte are the same electrolyte.

It should be noted that the first bare cell 212a is different from the second bare cell 212b, specifically in at least one of their shape, size, process, structure, and material system, and in particular, the structure and/or material system. The difference in shape refers to a difference in the shape of appearance. The difference in size is mainly reflected in a difference in the length, width, and height of the bare cells, as well as the volume occupied by the three-dimensional space. The difference in process is mainly reflected in a difference in manufacturing and processing methods of the bare cells. For example, one of the two bare cells is wound, and the other is stacked. The difference in structure refers to a difference in at least one of the number of tabs of the bare cells, positions of the tabs, winding methods of the bare cells, stacking methods of the bare cells, and the like. The difference in material system refers to a difference in at least one of an electrode material type of the bare cells, a current collector type and thickness, a coating weight of the electrode material, compacted density of the electrode material, a length difference and width difference between the electrode plate and the separator, a length difference and width difference between the electrode plates, and the like.

In addition, the first electrolyte is the same as the second electrolyte, specifically in both their components and a mass percentage (or volume percentage) of each component.

According to the foregoing description, in implementation 2, different bare cells are provided such that the first cell 21a and the second cell 21b have different characteristics. On this basis, because the first electrolyte and the second electrolyte are the same, the structural complexity of the battery 20 can also be reduced.

### Implementation 3

The first bare cell 212 is different from the second bare cell 212b, and the first electrolyte and the second electrolyte are different electrolytes. In this way, in implementation 3, different electrolytes and different bare cells are provided such that the first cell 21a and the second cell 21b have different characteristics. Due to the factors of both the electrolyte and the bare cell, the characteristics of the first cell 21a and the characteristics of the second cell 21b can be maximized.

According to the description of the foregoing embodiments, when the first cell 21a and the second cell 21b do not share the shell and the electrolyte, there may be a plurality of arrangements of the first cell 21a and the second cell 21b. FIG. 7 and FIG. 8 only show an example in which the first cell 21a and the second cell 21b are stacked along the Z-axis direction, which should not be considered as a special limitation on this application. In some other embodiments, referring to FIG. 20, FIG. 20 is a schematic structural diagram of a battery 20 according to some other embodiments of this application. In this embodiment, the first cell 21a and the second cell 21b are arranged along the X-axis direction.

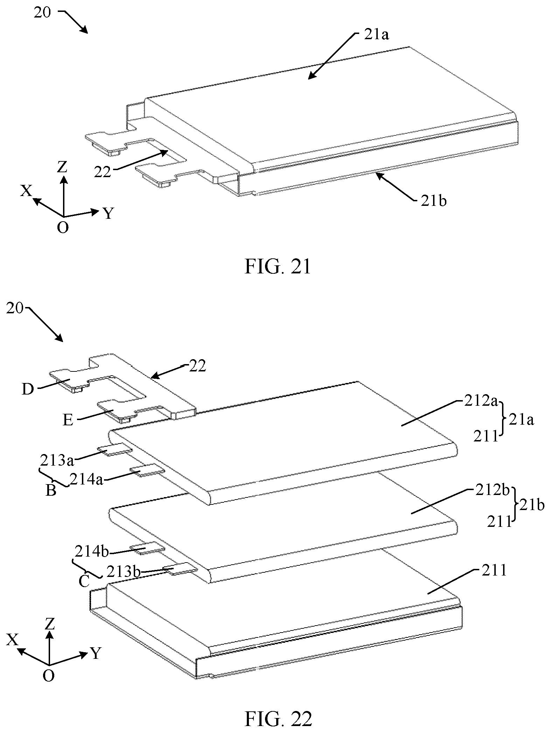

Referring to FIG. 21 and FIG. 22, FIG. 21 is a schematic structural diagram of a battery 20 according to some other embodiments of this application, and FIG. 22 is an exploded view of the battery 20 shown in FIG. 21. Compared with the battery 20 shown in FIG. 7, in the battery 20 shown in this embodiment, the shell of the first cell 21a and the shell of the second cell 22b are the same shell 211. The first bare cell 212a and the second bare cell 212b are both located in the shell 211.

In this way, the first cell 21a and the second cell 21b share the same shell and can share the electrolyte in the same shell, and the first cell 21a and the second cell 21b form a composite cell. On the premise that the volume of the battery 20 is constant, the shell 211 in the composite cell occupies a small volume, and the battery has a high energy density, which can improve a space utilization rate of the device.

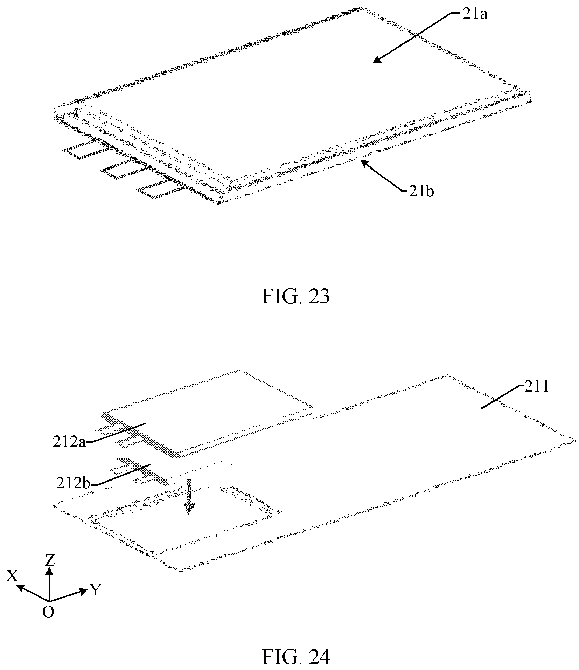

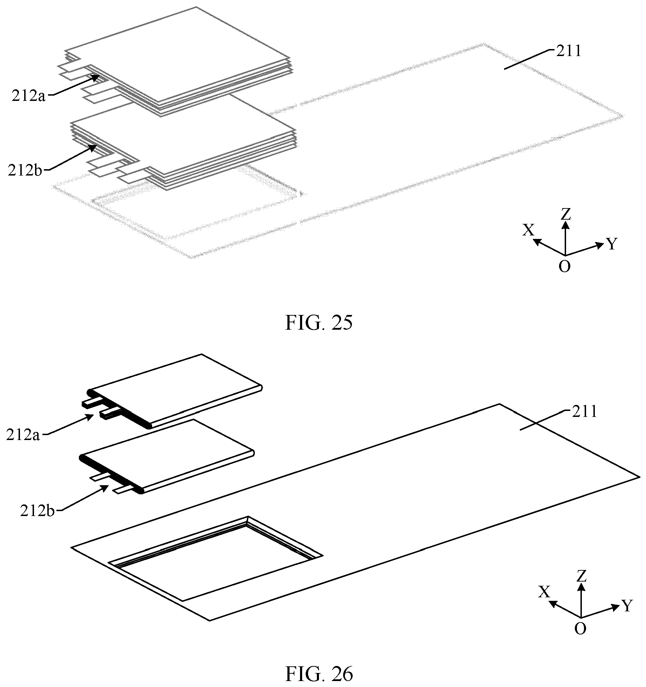

On the basis of the foregoing embodiment, the first bare cell 212a and the second bare cell 212b may both be wound bare cells, or may both be stacked bare cells, or one of them may be a wound bare cell, and the other is a stacked bare cell. Referring to FIG. 23 and FIG. 24, FIG. 23 is a schematic structural diagram of a composite cell in the battery 20 shown in FIG. 21, and FIG. 24 is a schematic structural diagram of composition of the composite cell shown in FIG. 23. In this embodiment, the first bare cell 212a and the second bare cell 212b are both wound bare cells. Referring to FIG. 25, FIG. 25 is another schematic structural diagram of composition of a composite cell in the battery 20 shown in FIG. 21. In this embodiment, the first bare cell 212a and the second bare cell 212b are both stacked bare cells.

When the first cell 21a and the second cell 22b share the same shell, the first bare cell 212a and the second bare cell 212b are two different bare cells, specifically in at least one of their shape, size, process, structure, and material system, and in particular, the structure and/or material system. The difference in shape refers to a difference in the shape of appearance. The difference in size is mainly reflected in a difference in the length, width, and height of the bare cells, as well as the volume occupied by the three-dimensional space. The difference in process is mainly reflected in a difference in manufacturing and processing methods of the bare cells. For example, one of the two bare cells is wound, and the other is stacked. The difference in structure refers to a difference in at least one of the number of tabs of the bare cells, positions of the tabs, winding methods of the bare cells, stacking methods of the bare cells, and the like. The difference in material system refers to a difference in at least one of an electrode material type of the bare cells, a current collector type and thickness, a coating weight of the electrode material, compacted density of the electrode material, a length difference and width difference between the electrode plate and the separator, a length difference and width difference between the electrode plates, and the like. Therefore, the first cell 21a and the second cell 21b have different characteristics.

With reference to the description of the foregoing embodiments, five examples are given below to reflect the difference between the first bare cell 212a and the second bare cell 212b.

### Example 1

Referring to FIG. 22, FIG. 24, or FIG. 25, the first bare cell 212a is the same as the second bare cell 212b in the three aspects of shape, size, and process. The positions of the tabs of the first bare cell 212a are different from those of the tabs of the second bare cell 212b, that is, the structures thereof are different. The material system of the first bare cell 212a is different from that of the second bare cell 212b.

In this way, the difference between the first bare cell 212a and the second bare cell 212b is reflected by the difference in structure and material system. Therefore, the first cell 21a and the second cell 21b have different characteristics. For example, the first cell 21a has fast-charging characteristics, while the second cell 21b has high-energy characteristics.

### Example 2

Referring to FIG. 26, FIG. 26 is another schematic structural diagram of composition of the composite cell shown in FIG. 23. In this embodiment, the first bare cell 212a and the second bare cell 212b are both wound bare cells, and the first bare cell 212a is the same as the second bare cell 212b in the three aspects of shape, size, and process. The structure of the electrode plate (including the positive electrode plate and the negative electrode plate) of the first bare cell 212a is the same as that of the positive electrode plate P1 shown in FIG. 17. The structure of the electrode plate (including the positive electrode plate and the negative electrode plate) of the second bare cell 212b is the same as that of the positive electrode plate P1 shown in FIG. 14. It can be learned that the electrode plate structure of the first bare cell 212a is different from that of the second bare cell 212b, and the positions of the tabs of the first bare cell 212a are different from those of the tabs of the second bare cell 212b. Therefore, the structures of the first bare cell 212a and the second bare cell 212b are different. In addition, for the first bare cell 212a, a coating surface of the positive electrode material has a density of 8 mg/cm² to 10 mg/cm², the negative electrode material has a compacted density of 1.2 g/cm³ to 1.5 g/cm³, a coating surface of the negative electrode material has a density of 4 mg/cm² to 6.5 mg/cm², the negative electrode material has a particle size D50 value of 4 um to 6 um, the negative electrode material has a particle size D90 value of 8.5 um to 10 um, activated carbon atoms in the negative electrode active material accounts for 3% to 10%, and the negative electrode current collector has a thickness of 6 um to 8 um. For the second bare cell 212b, a coating surface of the positive electrode material has a density of 13 mg/cm² to 20 mg/cm², the negative electrode material has a compacted density of 1.5 g/cm³ to 1.9 g/cm³, a coating surface of the negative electrode material has a density of 7 mg/cm² to 15 mg/cm², the negative electrode material has a particle size D50 value of 10 um to 15 um, the negative electrode material has a particle size D90 value of 15 um to 35 um, activated carbon atoms in the negative electrode active material accounts for 0% to 2%, and the negative electrode current collector has a thickness of 4 um to 6 um. In this way, the material system of the first bare cell 212a is different from that of the second bare cell 212b. In this embodiment, the first bare cell 212a and the second bare cell 212b share an electrolyte, and content of n-propylpropionate (n-propylpropionate, PP) in the electrolyte is greater than 20%.

In this way, the difference between the first bare cell 212a and the second bare cell 212b is reflected by the difference in structure and material system. Therefore, the first cell 21a and the second cell 21b have different characteristics. Specifically, the first cell 21a has a charging capability of at least 10C (that is, has fast-charging characteristics), while the second cell 21b has a volumetric energy density of at least 700 Wh/L (that is, has high-energy characteristics).

### Example 3

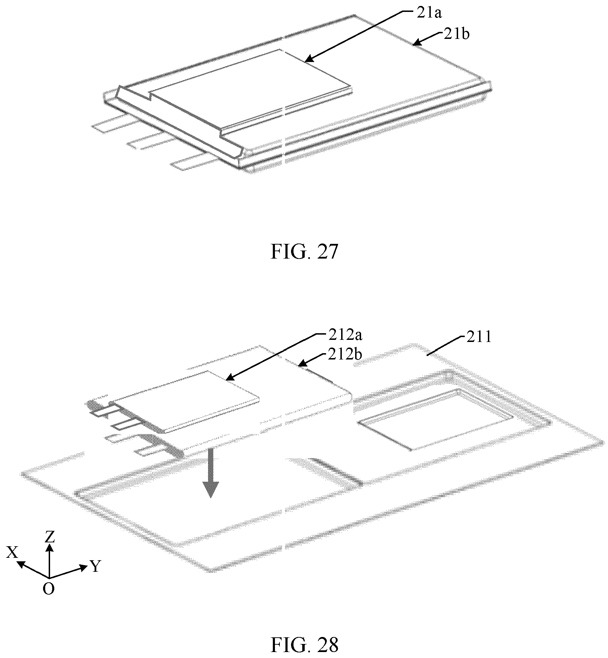

Referring to FIG. 27 and FIG. 28, FIG. 27 is another schematic structural diagram of a composite cell in the battery 20 shown in FIG. 21, and FIG. 28 is a schematic structural diagram of composition of the composite cell shown in FIG. 27. In this embodiment, the first bare cell 212a and the second bare cell 212b are the same in both shape and processes. The volume of the first bare cell 212a is less than that of the second bare cell 212b, that is, they have different sizes. The positions of the tabs of the first bare cell 212a are different from those of the tabs of the second bare cell 212b, that is, the structures thereof are different. The material system of the first bare cell 212a is different from that of the second bare cell 212b.

In this way, the difference between the first bare cell 212a and the second bare cell 212b is reflected by the difference in the three aspects of size, structure, and material system. Therefore, the first cell 21a and the second cell 21b have different characteristics. For example, the first cell 21a has fast-charging characteristics, while the second cell 21b has high-energy characteristics.

### Example 4

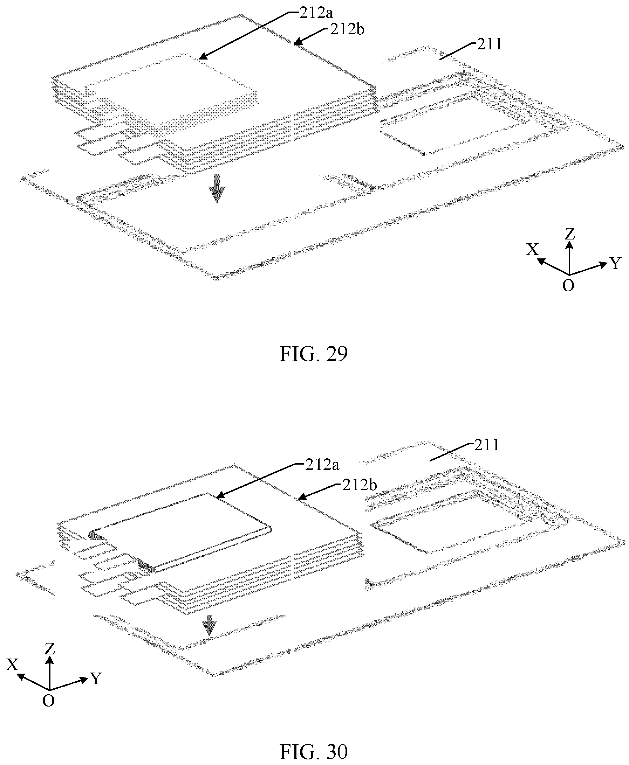

Referring to FIG. 29, FIG. 29 is another schematic structural diagram of composition of the composite cell shown in FIG. 27. In this embodiment, the first bare cell 212a and the second bare cell 212b are the same in both shape and processes. The volume of the first bare cell 212a is less than that of the second bare cell 212b, that is, they have different sizes. The positions of the tabs of the first bare cell 212a are different from those of the tabs of the second bare cell 212b, that is, the structures thereof are different. The material system of the first bare cell 212a is different from that of the second bare cell 212b.

In this way, similar to the embodiment shown in FIG. 28, the difference between the first bare cell 212a and the second bare cell 212b is reflected by the difference in the three aspects of size, structure, and material system. The difference between this embodiment and the embodiment shown in FIG. 28 lies in that, in the embodiment shown in FIG. 28, the first bare cell 212a and the second bare cell 212b are both wound bare cells; and in this embodiment, the first bare cell 212a and the second bare cell 212b are both stacked bare cells.

### Example 5

Referring to FIG. 30, FIG. 30 is another schematic structural diagram of composition of the composite cell shown in FIG. 27. In this embodiment, the first bare cell 212a and the second bare cell 212b are the same in shape. The volume of the first bare cell 212a is less than that of the second bare cell 212b, that is, they have different sizes. The first bare cell 212a is a wound bare cell, and the second bare cell 212b is a stacked bare cell, that is, they have different processes. The positions of the tabs of the first bare cell 212a are different from those of the tabs of the second bare cell 212b, that is, the structures thereof are different. The material system of the first bare cell 212a is different from that of the second bare cell 212b.

In this way, the difference between the first bare cell 212a and the second bare cell 212b is reflected by the difference in the four aspects of size, process, structure, and material system. Therefore, the first cell 21a and the second cell 21b have different characteristics. For example, the first cell 21a has fast-charging characteristics, while the second cell 21b has high-energy characteristics.

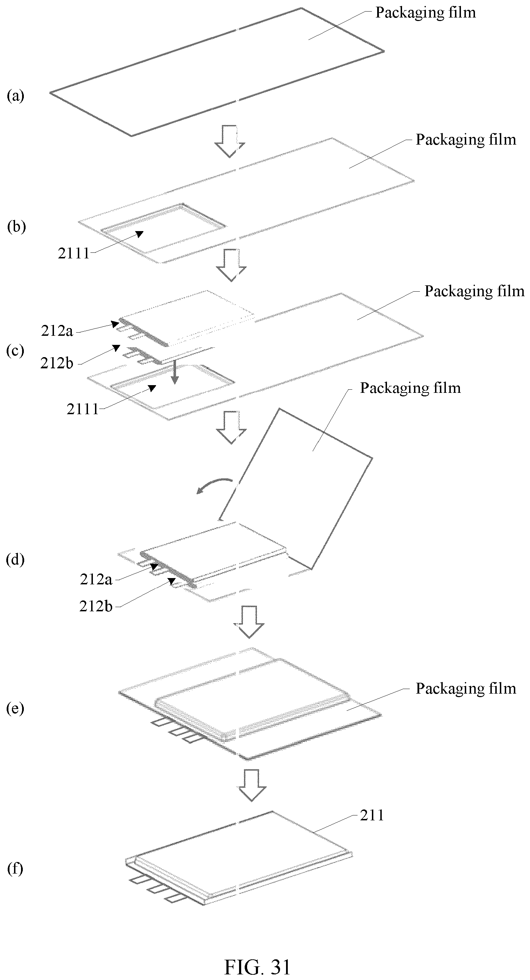

When the first cell 21a and the second cell 21b share the shell 211, a processing process of the composite cell may be implemented with reference to an embodiment shown in FIG. 31. Specifically, first, a dimple 2111 is punched on a packaging film (including, but not limited to, an aluminum-plastic film) shown in (a) of FIG. 31 to obtain the aluminum-plastic film with the dimple 2111 shown in (b) of FIG. 31. The dimple 2111 is also referred to as a punched depression. Next, referring to (c) of FIG. 31, a composite bare cell formed after the first bare cell 212a and the second bare cell 212b are stacked is positioned in the dimple 2111 of the packaging film to obtain a structure shown in (d) of FIG. 31. Then, the packaging film is folded in half and bonded together by using an adhesive material to obtain a structure shown in (e) of FIG. 31. Finally, operations such as electrolyte filling and sealing are performed, and the excess packaging film is cut away to finally obtain a composite cell shown in (f) of FIG. 31.

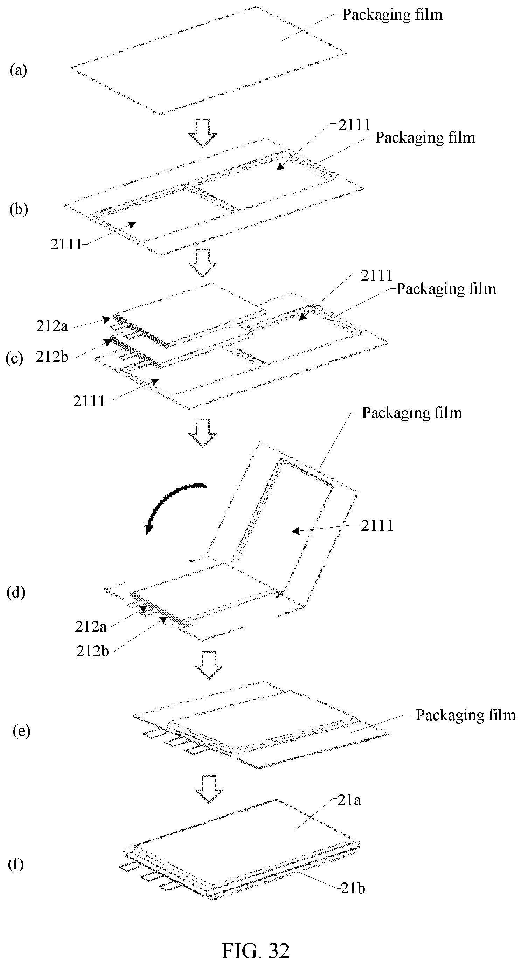

When the first cell 21a and the second cell 21b share the shell 211, a processing process of the composite cell may alternatively be implemented with reference to an embodiment shown in FIG. 32. Specifically, first, two dimples 2111 are punched on a packaging film (including, but not limited to, an aluminum-plastic film) shown in (a) of FIG. 32 to obtain the aluminum-plastic film with the two dimples 2111 shown in (b) of FIG. 32. Next, referring to (c) of FIG. 32, a composite bare cell formed after the first bare cell 212a and the second bare cell 212b are stacked is positioned in one dimple 2111 of the packaging film to obtain a structure shown in (d) of FIG. 32. Then, the packaging film is folded in half and bonded together by using an adhesive material, so that the other dimple 2111 covers the one dimple 2111 to obtain a structure shown in (e) of FIG. 32. Finally, operations such as electrolyte filling and sealing are performed, and the excess packaging film is cut away to obtain a composite cell shown in (f) of FIG. 32.

Compared with the processing process shown in FIG. 31, in the processing process shown in FIG. 32, the two dimples 2111 are provided on the packaging film, and a height of the inner space of the shell 211 is the sum of depths of the two dimples 2111. In this way, on the premise that the depth of a single dimple 2111 is limited, the shell 211 can accommodate a larger number of bare cells. On the premise that the height of the inner space of the shell 211 is limited, the two dimples 2111 are provided, so that a design depth of the single dimple 2111 can be reduced to prevent the packaging film from being damaged due to large deformation when the single dimple 2111 is punched.

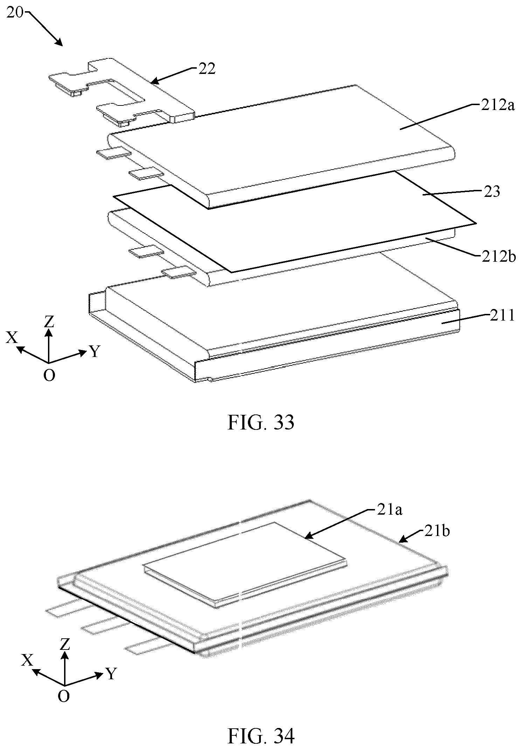

When the first cell 21a and the second cell 21b share the shell 211, in some embodiments, referring to FIG. 33, FIG. 33 is an exploded view of a battery 20 according to some other embodiments of this application. In this embodiment, the battery 20 further includes an isolation layer 23. The isolation layer 23 is disposed in the inner space of the shell 211 to divide the inner space of the shell 211 into a first chamber and a second chamber that are separate from each other. The first bare cell 212a is disposed in the first chamber, and the second bare cell 212b is disposed in the second chamber. In this way, different electrolytes may be respectively provided in the first chamber and the second chamber, which is beneficial to maximize the characteristics of the first cell 21a and the characteristics of the second cell 21b, respectively. Further, the isolation layer 23 separates the first bare cell 212a from the second bare cell 212b, which can prevent a short circuit between the first bare cell 212a and the second bare cell 212b. Still further, the first bare cell 212a and the second bare cell 212b are respectively infiltrated in the two electrolytes, the two electrolytes are separated by the isolation layer 23, and each electrolyte only needs to withstand a charging and discharging voltage of a corresponding bare cell, thereby improving the safety performance of the battery 20 and prolonging the service life of the battery 20.

In the foregoing embodiment, the first bare cell 212a and the second bare cell 212b have the same size and are stacked in the Z-axis direction, that is, an orthographic projection of the first bare cell 212a on the second bare cell 212b coincides with the second bare cell 212b. In this way, the isolation layer 23 is configured to insulate and isolate the first bare cell 212a from the second bare cell 212b.

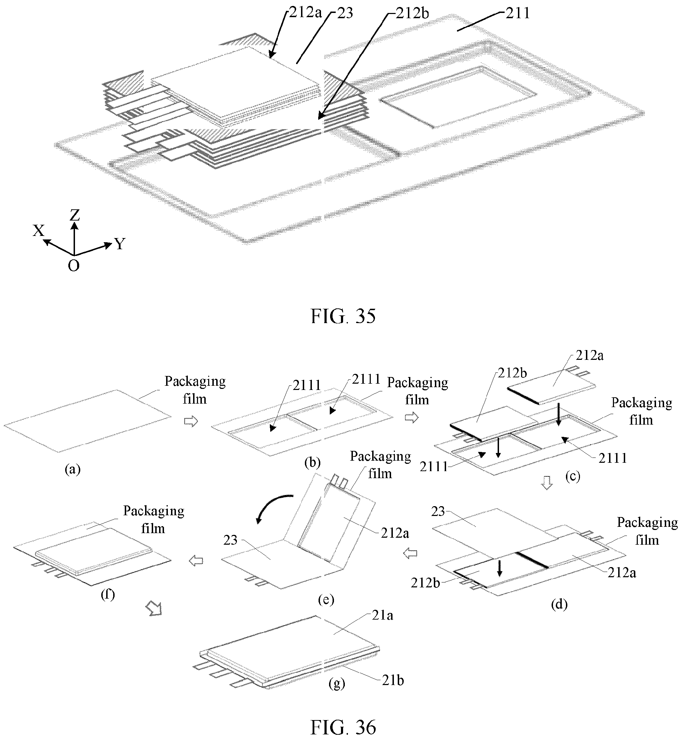

In some other embodiments, referring to FIG. 34 and FIG. 35, FIG. 34 is a schematic structural diagram of a composite cell according to some other embodiments of this application, and FIG. 35 is a schematic structural diagram of composition of the composite cell shown in FIG. 34. In this embodiment, the volume of the first bare cell 212a is less than that of the second bare cell 212b, and the end of the first bare cell 212a provided with the tabs is staggered with the end of the second bare cell 212b provided with the tabs. On the basis of this embodiment, the isolation layer 23 is also located between the tabs of the first bare cell 212a and the second bare cell 212b, so as to provide insulation and isolation and reduce the risk of short circuit between the tabs of the first bare cell 212a and the second bare cell 212b.

In some other embodiments, when the volume of the first bare cell 212a is greater than that of the second bare cell 212b, and the end of the first bare cell 212a provided with the tabs is staggered with the end of the second bare cell 212b provided with the tabs, the isolation layer 23 is also located between the first bare cell 212a and the tabs of the second bare cell 212b, so as to provide insulation and isolation and reduce the risk of short circuit between the first bare cell 212a and the tabs of the second bare cell 212b.

With reference to the isolation layer 23 described in any one of the foregoing embodiments, the isolation layer 23 is secured around to an inner wall of the shell 211 with its own edges. Specifically, the edges of the isolation layer 23 may be secured around to the inner wall of the shell 211 by means of gluing, clamping, snapping, or the like, which is not specifically limited herein.

For example, referring to FIG. 36, FIG. 36 is a schematic diagram of a processing process of a composite cell according to some other embodiments of this application. In this embodiment, first, two dimples 2111 are punched on a packaging film (including, but not limited to, an aluminum-plastic film) shown in (a) of FIG. 36 to obtain the aluminum-plastic film with the two dimples 2111 shown in (b) of FIG. 36. Next, referring to (c) of FIG. 36, the first bare cell 212a and the second bare cell 212b are positioned in the two dimples 2111 respectively, and referring to (d) of FIG. 36, the isolation layer 23 is positioned between the first bare cell 212a and the second bare cell 212b. A size of the isolation layer 23 is greater than that of an opening of the dimple 2111. Then, referring to (e) of FIG. 36, parts of the packaging film in which the two dimples 2111 are respectively located are folded in half, and at the same time, the edges of the isolation layer 23 are clamped and secured around between the two folded parts of the packaging film by means of bonding or the like to obtain a structure shown in (f) of FIG. 36. Finally, the packaging film is sealed and filled with the electrolyte, and the excess packaging film and separator are cut away to obtain a composite cell shown in (g) of FIG. 36.

In this way, the isolation layer 23 is secured in the shell 211 during the processing of the composite cell, which can improve the connection stability and operational convenience between the isolation layer 23 and the shell 211.

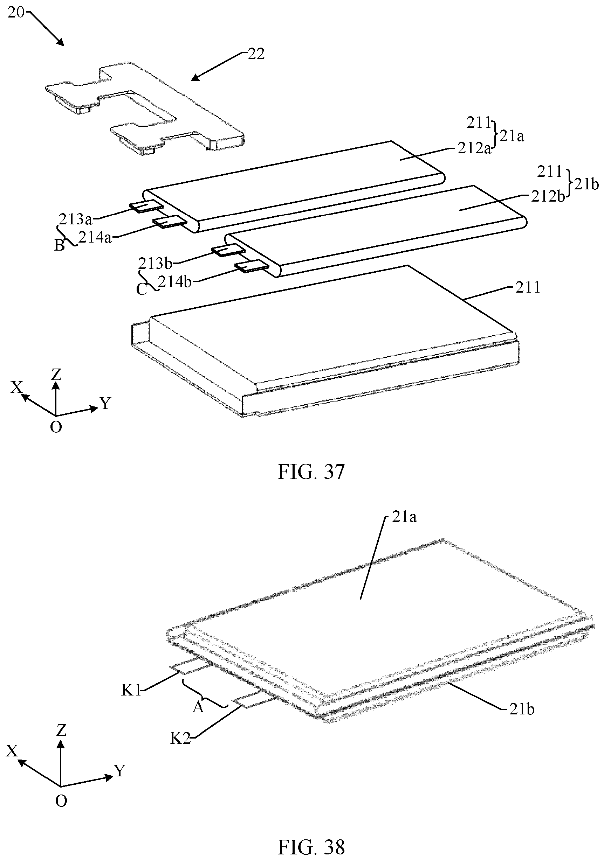

When the first cell 21a and the second cell 21b share the shell, there may be a plurality of arrangements of the first bare cell 212a and the second bare cell 212b. FIG. 22, FIG. 24, FIG. 25, FIG. 26, FIG. 28, FIG. 29, FIG. 30, FIG. 33, or FIG. 35 only shows an example in which the first bare cell 212a and the second bare cell 212b are stacked along the Z-axis direction. In some other embodiments, referring to FIG. 37, FIG. 37 is an exploded view of a composite cell according to some other embodiments of this application. In this embodiment, the first bare cell 212a and the second bare cell 212b are arranged along the X-axis direction.

With reference to the battery 20 described in the foregoing embodiments (including the battery embodiments of the solution in which the first cell 21a and the second cell 21b share the shell, and the battery embodiments of the solution in which the first cell 21a and the second cell 21b do not share the shell), a relationship between the first tab 213a of the first bare cell, the second tab 214a of the first bare cell, the first tab 213b of the second bare cell, and the second tab 214b of the second bare cell may have the following three embodiments.

### Embodiment 1

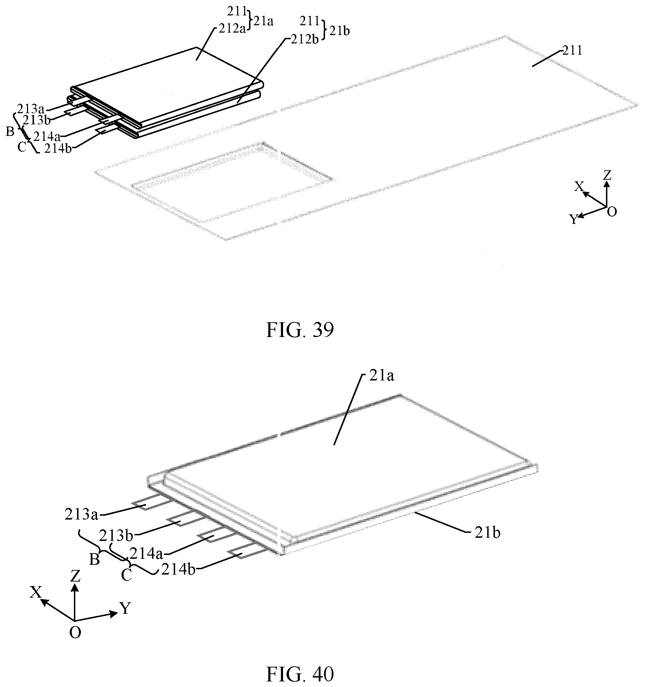

Referring to FIG. 38 and FIG. 39, FIG. 38 is a schematic structural diagram of a composite cell according to some other embodiments of this application, and FIG. 39 is an exploded view of the composite cell shown in FIG. 38. In this embodiment, the first tab 213a of the first bare cell and the first tab 213b of the second bare cell are both positive electrode tabs, and the second tab 214a of the first bare cell and the second tab 214a of the second bare cell are both negative electrode tabs. Alternatively, the first tab 213a of the first bare cell and the first tab 213b of the second bare cell are both negative electrode tabs, and the second tab 214a of the first bare cell and the second tab 214a of the second bare cell are both positive electrode tabs.

On this basis, the first tab 213a of the first bare cell and the first tab 213b of the second bare cell are stacked, and are secured and electrically connected together by welding, pressing, or the like to form a composite tab K1. The second tab 214a of the first bare cell and the second tab 214b of the second bare cell are stacked, and are secured and electrically connected together by welding, pressing, or the like to form another composite tab K2.

In this way, the composite cell, from the appearance, has at least the composite tab K1 and the composite tab K2, the two terminals of the first charging and discharging port B are respectively integrated with the two terminals of the second charging and discharging port C, and the first charging and discharging port B and the second charging and discharging port C are integrated into one charging and discharging port A. With the same charging and discharging port A, the first cell 21a and the second cell 21b can be charged or discharged at the same time.

### Embodiment 2

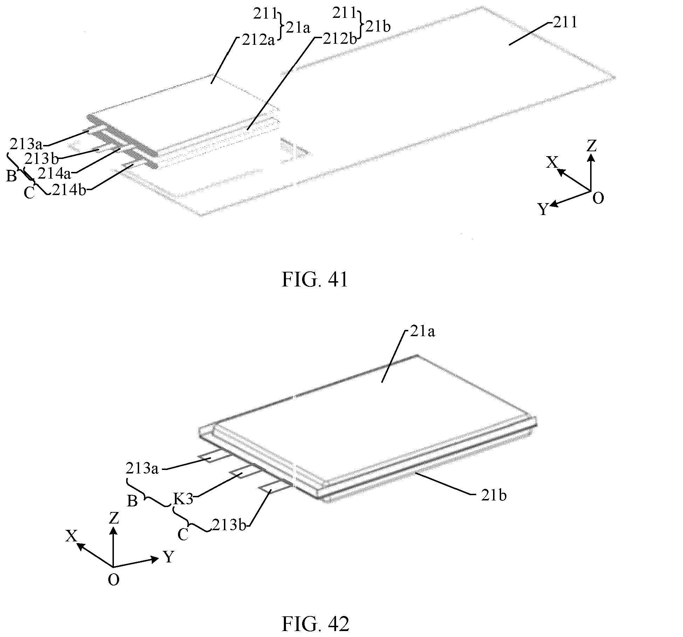

Referring to FIG. 40 and FIG. 41, FIG. 40 is a schematic structural diagram of a composite cell according to some other embodiments of this application, and FIG. 41 is an exploded view of the composite cell shown in FIG. 40. In this embodiment, the first tab 213a of the first bare cell is one of a positive electrode tab and a negative electrode tab, and the second tab 214a of the first bare cell is the other of a positive electrode tab and a negative electrode tab. The first tab 213b of the second bare cell is one of a positive electrode tab and a negative electrode tab, and the second tab 214b of the second bare cell is the other of a positive electrode tab and a negative electrode tab.

On this basis, the first tab 213a of the first bare cell, the second tab 214a of the first bare cell, the first tab 213b of the second bare cell, and the second tab 214b of the second bare cell are separate from each other.

In this way, the composite cell, from the appearance, has at least four tabs, and the first charging and discharging port B and the second charging and discharging port C are different charging and discharging ports. The first charging and discharging port B and the second charging and discharging port C do not interfere with each other. With the first charging and discharging port B and the second charging and discharging port C, the first cell 21a and the second cell 21b can be charged or discharged at the same time, or only the first cell 21a or the second cell 21b can be charged or discharged, or the second cell 21b may be discharged while the first cell 21a is being charged, or the second cell 21b may be charged while the first cell 21a is being discharged. Therefore, the composite cell has a plurality of charging and discharging modes to meet requirements in different application scenarios.

For example, for a composite cell formed by combining a fast-charging cell and a high-energy cell, it is possible to charge only the fast-charging cell without charging the high-energy cell. Therefore, the battery 20 can be adjusted to a fast charging mode to meet requirements in a scenario of a short allowable charging time. Alternatively, it is possible to charge only the high-energy cell without charging the fast-charging cell. Therefore, the battery 20 is adjusted to a high-energy charging mode to meet requirements in a scenario of a long battery life. Alternatively, it is possible to charge both the fast-charging cell and the high-energy cell. Therefore, the battery 20 can be adjusted to a high-energy fast-charging mode, so as to meet requirements in both the scenarios of a short allowable charging time and a long battery life.

### Embodiment 3

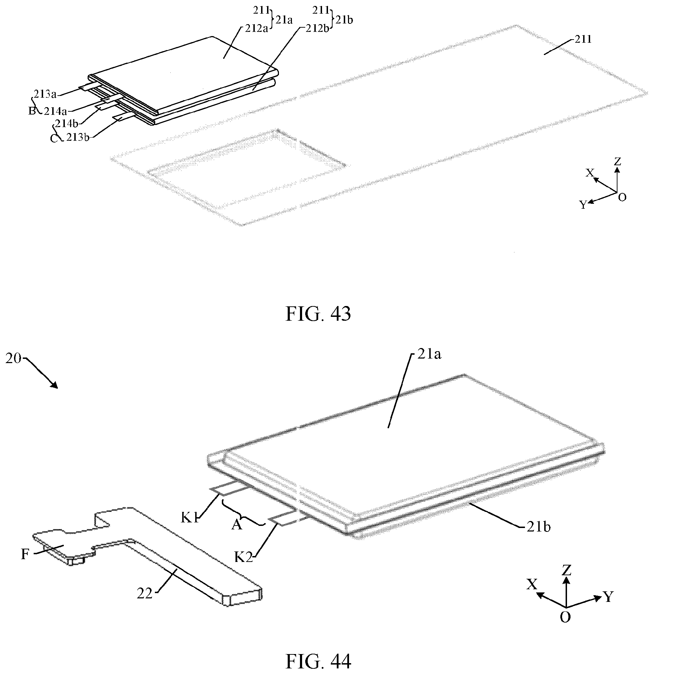

Referring to FIG. 42 and FIG. 43, FIG. 42 is a schematic structural diagram of a composite cell according to some other embodiments of this application, and FIG. 43 is an exploded view of the composite cell shown in FIG. 42. In this embodiment, the first tab 213a of the first bare cell is one of a positive electrode tab and a negative electrode tab, and the second tab 214a of the first bare cell is the other of a positive electrode tab and a negative electrode tab. The first tab 213b of the second bare cell is one of a positive electrode tab and a negative electrode tab, and the second tab 214b of the second bare cell is the other of a positive electrode tab and a negative electrode tab.

On this basis, the second tab 214a of the first bare cell and the second tab 214b of the second bare cell are stacked, and are secured and electrically connected together by welding, pressing, or the like to form a composite tab K3. The first tab 213a of the first bare cell and the first tab 213b of the second bare cell are located on two opposite sides of the composite tab K3, respectively.

In this way, the composite cell, from the appearance, has at least one composite tab K3. One terminal of the first charging and discharging port B is integrated with one terminal of the second charging and discharging port C, and the first cell 21a and the second cell 21b are connected in parallel or in series to form the composite cell.

Specifically, according to the foregoing description, the first tab 213a of the first bare cell is one of a positive electrode tab and a negative electrode tab, and the second tab 214a of the first bare cell is the other of a positive electrode tab and a negative electrode tab. The first tab 213b of the second bare cell is one of a positive electrode tab and a negative electrode tab, and the second tab 214b of the second bare cell is the other of a positive electrode tab and a negative electrode tab. When the second tab 214a of the first bare cell and the second tab 214b of the second bare cell are both positive electrode tabs, the first cell 21a and the second cell 21b share the negative electrode, and the first cell 21a and the second cell 21b are connected in parallel to form the composite cell. When the second tab 214a of the first bare cell and the second tab 214b of the second bare cell are both negative electrode tabs, the first cell 21a and the second cell 21b share the positive electrode, and the first cell 21a and the second cell 21b are connected in parallel to form the composite cell. When the second tab 214a of the first bare cell is a positive electrode tab, and the second tab 214b of the second bare cell is a negative electrode tab, or when the second tab 214a of the first bare cell is a negative electrode tab, and the second tab 214b of the second bare cell is a positive electrode tab, the first cell and the second cell are connected in series to form the composite cell.

When the first cell 21a and the second cell 21b are connected in parallel or in series to form the composite cell, the first cell 21a and the second cell 21b can be charged or discharged at the same time, or only the first cell 21a or the second cell 21b can be charged or discharged, or the second cell 21b may be discharged while the first cell 21a is being charged, or the second cell 21b may be charged while the first cell 21a is being discharged. Therefore, the battery 20 has a plurality of charging and discharging modes to meet requirements in different application scenarios.

It should be noted that, the foregoing Embodiments 1 to 3 are all described on the basis that the first cell 21a and the second cell 21b share the shell. On this basis, a welding part of the two tabs (including the first tab 213a of the first bare cell and the first tab 213b of the second bare cell) constituting the composite tab K1 may be located inside or outside the shell 211, which is not specifically limited herein. Similarly, a welding part of the two tabs (including the second tab 214a of the first bare cell and the second tab 214b of the second bare cell) constituting the composite tab K2 may be located inside or outside the shell 211, which is not specifically limited herein. A welding part of the two tabs (including the second tab 214a of the first bare cell and the second tab 214b of the second bare cell) constituting the composite tab K3 may be located inside or outside the shell 211, which is not specifically limited herein.

In some other embodiments, the foregoing Embodiments 1 to 3 may alternatively be described on the basis that the first cell 21a and the second cell 21b do not share the shell. On this basis, a welding part of the two tabs constituting the composite tab K1, the composite tab K2, or the composite tab K3 are usually located outside the shell of the first cell 21a and the shell of the second cell 21b.

Referring back to FIG. 8 or FIG. 22, the protection board 22 has a first charging and discharging circuit and a second charging and discharging circuit. The first charging and discharging circuit and the second charging and discharging circuit are integrated on the protection board 22, which is not shown in the figure. The first charging and discharging circuit is electrically connected to the first bare cell 212a through the first charging and discharging port B. On this basis, the protection board 22 further has a third charging and discharging port D. The third charging and discharging port D is located on the first charging and discharging circuit. The protection board 22 is configured to be electrically connected to the power management module, the charging management module, and the charger through the third charging and discharging port D, so as to form a charging and discharging link. Similarly, the second charging and discharging circuit is electrically connected to the second bare cell 212b through the second charging and discharging port C. On this basis, the protection board 22 further has a fourth charging and discharging port E, and the fourth charging and discharging port E is located on the second charging and discharging circuit. The protection board 22 is configured to be electrically connected to the power management module, the charging management module, and the charger through the fourth charging and discharging port E, so as to form another charging and discharging link.

With reference to the foregoing Embodiments 1 to 3, structure forms of the first charging and discharging circuit, the second charging and discharging circuit, the third charging and discharging port D, and the fourth charging and discharging port E are also different. Details are as follows:
With reference to the foregoing Embodiment 1, referring to FIG. 44, FIG. 44 is a schematic structural diagram of a protection board 22 and the composite cell shown in FIG. 38. In this embodiment, the first charging and discharging circuit and the second charging and discharging circuit of the protection board 22 are the same charging and discharging circuit. This same charging and discharging circuit is electrically connected to both the first bare cell 212a and the second bare cell 212b through the charging and discharging port A. On this basis, the third charging and discharging port D and the fourth charging and discharging port E are integrated into one charging and discharging port F. The protection board 22 is configured to be electrically connected to the power management module, the charging management module, and the charger through the same charging and discharging port F, so as to perform charging and discharging management and detection of the parameters such as the capacity, the number of cycles, and the state of health for both the first cell 21a and the second cell 21b.

With reference to the foregoing Embodiment 2, referring to FIG. 22 and FIG. 40, the first charging and discharging circuit and the second charging and discharging circuit of the protection board 22 are different charging and discharging circuits. The first charging and discharging circuit is electrically connected to the first bare cell 212a through the first charging and discharging port B. The second charging and discharging circuit is electrically connected to the second bare cell 212b through the second charging and discharging port C. The protection board 22 is configured to be electrically connected to the power management module, the charging management module, and the charger through the third charging and discharging port D and the fourth charging and discharging port E. In this way, charging and discharging management and detection of the parameters such as the capacity, the number of cycles, and the state of health may be performed for one of the first cell 21a and the second cell 21b, or charging and discharging management and detection of the parameters such as the capacity, the number of cycles, and the state of health may be performed for both the first cell 21a and the second cell 21b.

With reference to the foregoing Embodiment 3, referring to FIG. 22 and FIG. 42, the first charging and discharging circuit and the second charging and discharging circuit of the protection board 22 are different charging and discharging circuits. The first charging and discharging circuit is electrically connected to the first bare cell 212a through the first charging and discharging port B. The second charging and discharging circuit is electrically connected to the second bare cell 212b through the second charging and discharging port C. The protection board 22 is configured to be electrically connected to the power management module, the charging management module, and the charger through the third charging and discharging port D and the fourth charging and discharging port E. In this way, charging and discharging management and detection of the parameters such as the capacity, the number of cycles, and the state of health may be performed for one of the first cell 21a and the second cell 21b, or charging and discharging management and detection of the parameters such as the capacity, the number of cycles, and the state of health may be performed for both the first cell 21a and the second cell 21b. On this basis, the charging management module may further be used to intelligently manage charging and discharging on each charging and discharging port. For example, charging currents on the two charging and discharging ports can be separately controlled based on the characteristics of the cells. For example, when the first cell 21a is a fast-charging cell and the second cell 21b is a high-energy cell, the first cell 21a may be charged with a current at a high rate of at least 2C, and the second cell 21b may be charged with a current at a relatively low rate of 2C or less. The charging management module can not only control the charging and discharging of the battery, but can also intelligently manage the use of the battery based on the respective characteristics of the cells, so as to ensure that the battery has a longer service life while maximizing the performance of the cells. In addition, with the two charging and discharging ports, it is also possible to charge one cell while discharging the other cell at the same time. In addition, because the second tabs of the two cells are shared, a utilization rate of the device layout space on the protection board is improved, and the efficiency and number of the devices are improved, which can effectively reduce link impedance, improve a charging speed, reduce heat, and improve the charging experience.

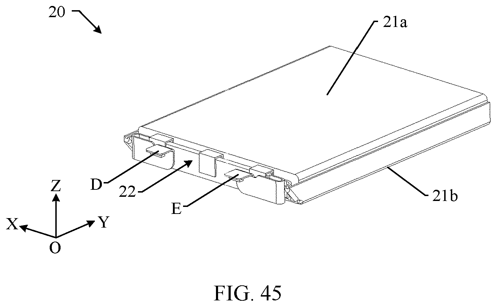

Referring back to FIG. 22, the protection board 22 is perpendicular or approximately perpendicular to an end face of the first cell 21a provided with the tabs, and the protection board 22 is perpendicular or approximately perpendicular to an end face of the second cell 21b provided with the tabs. In some other embodiments, referring to FIG. 45, FIG. 45 is a schematic structural diagram of a battery 20 according to some other embodiments of this application. In this embodiment, the protection board 22 is parallel or approximately parallel to an end face of the composite cell provided with the tabs, and the protection board 22 is secured to the end face of the composite cell provided with the tabs.

In this way, on the premise that the capacity of the battery 20 is constant, the length of the battery 20 along the Y-axis direction can be reduced to reduce the space occupied by the battery 20 in the electronic device 100. On the premise that the length of the battery 20 along the Y-axis direction is constant, the capacity of the battery 20 can be increased, thereby prolonging the battery life of the battery 20.

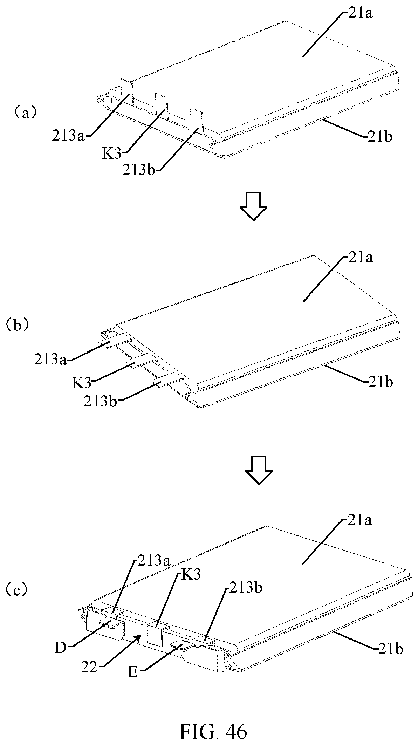

The battery 20 shown in FIG. 45 may be formed by packaging the composite cell shown in FIG. 42. Specifically, referring to FIG. 46, FIG. 46 is a schematic diagram of a process of packaging the composite cell shown in FIG. 42 into the battery 20 shown in FIG. 45. Specifically, first, the tabs and part of the packaging film of the composite cell shown in FIG. 42 are folded to be parallel or approximately parallel to the end face of the composite cell from which the tabs are led out, and they are secured together by means of gluing or the like to obtain a structure shown in (a) of FIG. 46. Then, the tabs are bent again to control a height of the composite cell in the electronic device to obtain a structure shown in (b) of FIG. 46. Finally, the protection board 22 is stacked on the end face of the composite cell from which the tabs are led out, and they are secured together by bending the tabs for clamping or gluing to obtain a battery 20 shown in (c) of FIG. 46.

The foregoing embodiments only give examples in which the battery 20 includes the first cell 21a and the second cell 21b. In some other examples, the battery 20 may further include a third cell, a fourth cell, a fifth cell, and the like. The third cell, the fourth cell, the fifth cell, and the like are different from the first cell 21a and also different from the second cell 21b. Therefore, the battery 20 can have three or more different characteristics. The third cell, the fourth cell, the fifth cell, and the like may or not share a shell and an electrolyte with the first cell 21a and the second cell 21b, which is not specifically limited herein.

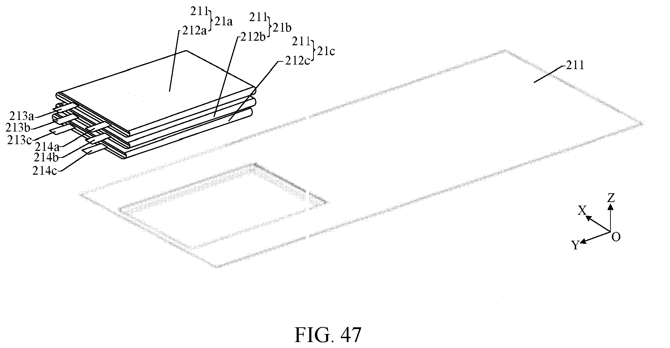

For example, referring to FIG. 47, FIG. 47 is a schematic structural diagram of composition of a composite cell according to some other embodiments of this application. In this embodiment, the battery 20 includes, in addition to the first cell 21a and the second cell 21b, a third cell 21c, and the third cell 21c includes a third bare cell 212c. The third cell 21c is different from the first cell 21a, and the third cell 21c is also different from the second cell 21b. The first cell 21a, the second cell 21b, and the third cell 21c share a shell 211 and an electrolyte. In this way, the battery 20 has three different characteristics at the same time to meet requirements in three different application scenarios.

In the foregoing embodiment, the third bare cell 212c has a first tab 213c and a second tab 214c. The first tab 213c, the second tab 214c, the tabs of the first bare cell 212a, and the tabs of the second bare cell 213b may form a composite tab. Specific combinations can be derived according to the foregoing Embodiment 1 or Embodiment 3, and details are not described herein again.

The specific features, structures, materials, or characteristics described in this specification may be combined in a suitable manner in any one or more embodiments or examples.

## Claims

1. A battery (20), comprising a first cell (21a), a second cell (21b), and an isolation layer (23), wherein:
the first cell is different from the second cell;
the first cell comprises a first shell (211a) and a first bare cell (212a);
the second cell comprises a second shell (211b) and a second bare cell (212b);
the first shell and the second shell are the same shell, the first bare cell and the second bare cell are both disposed in the same shell, the first bare cell is different from the second bare cell, and the first bare cell and the second bare cell are stacked; and
the isolation layer is disposed in the same shell and divides the inner space of the same shell into a first chamber and a second chamber that are separate from each other, the first bare cell is disposed in the first chamber, and the second bare cell is disposed in the second chamber,
wherein the first cell is one of a high-energy cell, a fast-charging cell, a high-temperature-resistant cell, a low-temperature-resistant cell, and a long-life cell; and the second cell is another of a high-energy cell, a fast-charging cell, a high-temperature-resistant cell, a low-temperature-resistant cell, and a long-life cell.

2. The battery according to claim 1, wherein the first bare cell has a first tab (213a) and a second tab (214a); the first tab of the first bare cell is a positive electrode tab, and the second tab of the first bare cell is a negative electrode tab; or the first tab of the first bare cell is a negative electrode tab, and the second tab of the first bare cell is a positive electrode tab; and the first tab of the first bare cell and the second tab of the first bare cell form a first charging and discharging port (B); and
the second bare cell has a first tab (213b) and a second tab (214b); the first tab of the second bare cell is a positive electrode tab, and the second tab of the second bare cell is a negative electrode tab; or the first tab of the second bare cell is a negative electrode tab, and the second tab of the second bare cell is a positive electrode tab; and the first tab of the second bare cell and the second tab of the second bare cell form a second charging and discharging port (A).

3. The battery according to claim 2, wherein the first tab of the first bare cell and the first tab of the second bare cell are both positive electrode tabs, and the second tab of the first bare cell and the second tab of the second bare cell are both negative electrode tabs; or the first tab of the first bare cell and the first tab of the second bare cell are both negative electrode tabs, and the second tab of the first bare cell and the second tab of the second bare cell are both positive electrode tabs; and
the first tab of the first bare cell and the first tab of the second bare cell are stacked and secured to form a first composite tab, the second tab of the first bare cell and the second tab of the second bare cell are stacked and secured to form a second composite tab, and the first charging and discharging port and the second charging and discharging port are integrated into one charging and discharging port.

4. The battery according to claim 2, wherein the second tab of the first bare cell and the second tab of the second bare cell are stacked and secured to form a composite tab, the first tab of the first bare cell and the first tab of the second bare cell are respectively located on opposite sides of the composite tab, and one terminal of the first charging and discharging port and one terminal of the second charging and discharging port are integrated as a whole.

5. The battery according to claim 4, wherein the first tab of the first bare cell is a positive electrode tab, and the second tab of the first bare cell is a negative electrode tab; and the first tab of the second bare cell is a negative electrode tab, and the second tab of the second bare cell is a positive electrode tab; or
the first tab of the first bare cell is a negative electrode tab, and the second tab of the first bare cell is a positive electrode tab; and the first tab of the second bare cell is a positive electrode tab, and the second tab of the second bare cell is a negative electrode tab.

6. The battery according to claim 2, wherein the first tab of the first bare cell, the second tab of the first bare cell, the first tab of the second bare cell, and the second tab of the second bare cell are separate from each other, and the first charging and discharging port and the second charging and discharging port are different charging and discharging ports.

7. The battery according to any one of claims 2 to 6, further comprising a protection board (22), wherein the protection board has a first charging and discharging circuit, a third charging and discharging port (D), a second charging and discharging circuit, and a fourth charging and discharging port (E);
the first charging and discharging circuit is electrically connected to the first bare cell through the first charging and discharging port, the third charging and discharging port is located on the first charging and discharging circuit, and the protection board is configured to be electrically connected to a power management module, a charging management module, and a charger through the third charging and discharging port, so as to form a charging and discharging link; and
the second charging and discharging circuit is electrically connected to the second bare cell through the second charging and discharging port, the fourth charging and discharging port is located on the second charging and discharging circuit, and the protection board is configured to be electrically connected to the power management module, the charging management module, and the charger through the fourth charging and discharging port, so as to form another charging and discharging link.

8. An electronic device (100), comprising:
a housing (10), with a battery compartment (30) provided therein;
a power management module and a charging management module that are disposed in the housing; and
the battery (20) according to any one of claims 1 to 7, wherein the battery is mounted in the battery compartment, and the battery is electrically connected to the power management module and the charging management module.

## Patentansprüche

1. Batterie (20), umfassend eine erste Zelle (21a), eine zweite Zelle (21b) und eine Isolationsschicht (23), wobei:
sich die erste Zelle von der zweiten Zelle unterscheidet;
die erste Zelle ein erstes Gehäuse (211a) und eine erste nackte Zelle (212a) umfasst;
die zweite Zelle ein zweites Gehäuse (211b) und eine zweite nackte Zelle (212b) umfasst;
das erste Gehäuse und das zweite Gehäuse das gleiche Gehäuse sind, die erste nackte Zelle und die zweite nackte Zelle beide in demselben Gehäuse angeordnet sind, sich die erste nackte Zelle von der zweiten nackten Zelle unterscheidet und die erste nackte Zelle und die zweite nackte Zelle gestapelt sind; und
die Isolationsschicht in demselben Gehäuse angeordnet ist und den Innenraum desselben Gehäuses in eine erste Kammer und eine zweite Kammer unterteilt, die voneinander getrennt sind, wobei die erste nackte Zelle in der ersten Kammer angeordnet ist und die zweite nackte Zelle in der zweiten Kammer angeordnet ist,
wobei die erste Zelle eine Hochenergiezelle, eine Schnellladezelle, eine hochtemperaturbeständige Zelle, eine niedertemperaturbeständige Zelle oder eine langlebige Zelle ist; und die zweite Zelle eine andere aus einer Hochenergiezelle, einer Schnellladezelle, einer hochtemperaturbeständigen Zelle, einer niedertemperaturbeständigen Zelle und einer langlebigen Zelle ist.

2. Batterie nach Anspruch 1, wobei die erste nackte Zelle eine erste Lasche (213a) und eine zweite Lasche (214a) aufweist; wobei die erste Lasche der ersten nackten Zelle eine positive Elektrodenlasche ist und die zweite Lasche der ersten nackten Zelle eine negative Elektrodenlasche ist; oder die erste Lasche der ersten nackten Zelle eine negative Elektrodenlasche ist und die zweite Lasche der ersten nackten Zelle eine positive Elektrodenlasche ist; und wobei die erste Lasche der ersten nackten Zelle und die zweite Lasche der ersten nackten Zelle einen ersten Lade- und Entladeanschluss (B) bilden; und
die zweite nackte Zelle eine erste Lasche (213b) und eine zweite Lasche (214b) aufweist; wobei die erste Lasche der zweiten nackten Zelle eine positive Elektrodenlasche ist und die zweite Lasche der zweiten nackten Zelle eine negative Elektrodenlasche ist; oder die erste Lasche der zweiten nackten Zelle eine negative Elektrodenlasche ist und die zweite Lasche der zweiten nackten Zelle eine positive Elektrodenlasche ist; und wobei die erste Lasche der zweiten nackten Zelle und die zweite Lasche der zweiten nackten Zelle einen zweiten Lade- und Entladeanschluss (A) bilden.

3. Batterie nach Anspruch 2, wobei die erste Lasche der ersten nackten Zelle und die erste Lasche der zweiten nackten Zelle beide positive Elektrodenlaschen sind und die zweite Lasche der ersten nackten Zelle und die zweite Lasche der zweiten nackten Zelle beide negative Elektrodenlaschen sind; oder die erste Lasche der ersten nackten Zelle und die erste Lasche der zweiten nackten Zelle beide negative Elektrodenlaschen sind und die zweite Lasche der ersten nackten Zelle und die zweite Lasche der zweiten nackten Zelle beide positive Elektrodenlaschen sind; und
Die erste Lasche der ersten blanken Zelle und die erste Lasche der zweiten blanken Zelle sind gestapelt und befestigt, um eine erste Verbundlasche zu bilden, die zweite Lasche der ersten blanken Zelle und die zweite Lasche der zweiten blanken Zelle sind gestapelt und befestigt, um eine zweite Verbundlasche zu bilden, und der erste Lade- und Entladeanschluss sowie der zweite Lade- und Entladeanschluss sind zu einem einzigen Lade- und Entladeanschluss integriert.

4. Die Batterie nach Anspruch 2, wobei die zweite Lasche der ersten blanken Zelle und die zweite Lasche der zweiten blanken Zelle gestapelt und befestigt sind, um eine Verbundlasche zu bilden, wobei die erste Lasche der ersten blanken Zelle und die erste Lasche der zweiten blanken Zelle jeweils auf gegenüberliegenden Seiten der Verbundlasche angeordnet sind und ein Anschluss des ersten Lade- und Entladeanschlusses sowie ein Anschluss des zweiten Lade- und Entladeanschlusses als Ganzes integriert sind.

5. Die Batterie nach Anspruch 4, wobei die erste Lasche der ersten blanken Zelle eine positive Elektrodenlasche ist und die zweite Lasche der ersten blanken Zelle eine negative Elektrodenlasche ist; und die erste Lasche der zweiten blanken Zelle eine negative Elektrodenlasche ist und die zweite Lasche der zweiten blanken Zelle eine positive Elektrodenlasche ist; oder
die erste Lasche der ersten blanken Zelle eine negative Elektrodenlasche ist und die zweite Lasche der ersten blanken Zelle eine positive Elektrodenlasche ist; und die erste Lasche der zweiten blanken Zelle eine positive Elektrodenlasche ist und die zweite Lasche der zweiten blanken Zelle eine negative Elektrodenlasche ist.

6. Die Batterie nach Anspruch 2, wobei die erste Lasche der ersten blanken Zelle, die zweite Lasche der ersten blanken Zelle, die erste Lasche der zweiten blanken Zelle und die zweite Lasche der zweiten blanken Zelle voneinander getrennt sind und der erste Lade- und Entladeanschluss sowie der zweite Lade- und Entladeanschluss unterschiedliche Lade- und Entladeanschlüsse sind.

7. Die Batterie nach einem der Ansprüche 2 bis 6, ferner umfassend eine Schutzplatine (22), wobei die Schutzplatine einen ersten Lade- und Entladekreis, einen dritten Lade- und Entladeanschluss (D), einen zweiten Lade- und Entladekreis sowie einen vierten Lade- und Entladeanschluss (E) aufweist;
der erste Lade- und Entladekreis ist über den ersten Lade- und Entladeanschluss elektrisch mit der ersten blanken Zelle verbunden, der dritte Lade- und Entladeanschluss ist auf dem ersten Lade- und Entladekreis angeordnet, und die Schutzplatine ist so konfiguriert, dass sie über den dritten Lade- und Entladeanschluss elektrisch mit einem Energiemanagementmodul, einem Lademanagementmodul und einem Ladegerät verbunden ist, um eine Lade- und Entladeverbindung zu bilden; und
Der zweite Lade- und Entladestromkreis ist über den zweiten Lade- und Entladeanschluss elektrisch mit der zweiten bloßen Zelle verbunden, der vierte Lade- und Entladeanschluss befindet sich auf dem zweiten Lade- und Entladestromkreis, und die Schutzplatine ist so konfiguriert, dass sie über den vierten Lade- und Entladeanschluss elektrisch mit dem Energiemanagementmodul, dem Lademanagementmodul und dem Ladegerät verbunden ist, um so eine weitere Lade- und Entladeverbindung zu bilden.

8. Elektronisches Gerät (100), umfassend:
ein Gehäuse (10) mit einem darin vorgesehenen Batteriefach (30);
ein Energiemanagementmodul und ein Lademanagementmodul, die im Gehäuse angeordnet sind; und
die Batterie (20) nach einem der Ansprüche 1 bis 7, wobei die Batterie im Batteriefach montiert ist und die Batterie elektrisch mit dem Energiemanagementmodul und dem Lademanagementmodul verbunden ist.

## Revendications

1. Batterie (20), comprenant une première cellule (21a), une seconde cellule (21b) et une couche d'isolation (23), dans laquelle :
la première cellule est différente de la seconde cellule ;
la première cellule comprend une première enveloppe (211a) et une première cellule nue (212a) ;
la seconde cellule comprend une seconde enveloppe (211b) et une seconde cellule nue (212b) ;
la première enveloppe et la seconde enveloppe sont la même enveloppe, la première cellule nue et la seconde cellule nue sont toutes deux disposées dans la même enveloppe, la première cellule nue est différente de la seconde cellule nue, et la première cellule nue et la seconde cellule nue sont empilées ; et
la couche d'isolation est disposée dans la même enveloppe et divise l'espace intérieur de la même enveloppe en une première chambre et une seconde chambre qui sont séparées l'une de l'autre, la première cellule nue est disposée dans la première chambre, et la seconde cellule nue est disposée dans la seconde chambre,
dans laquelle la première cellule est l'une parmi une cellule à haute énergie, une cellule à charge rapide, une cellule résistante aux hautes températures, une cellule résistante aux basses températures et une cellule à longue durée de vie ; et la seconde cellule est une autre parmi une cellule à haute énergie, une cellule à charge rapide, une cellule résistante aux hautes températures, une cellule résistante aux basses températures et une cellule à longue durée de vie.

2. Batterie selon la revendication 1, dans laquelle la première cellule nue présente une première languette (213a) et une seconde languette (214a) ; la première languette de la première cellule nue est une languette d'électrode positive, et la seconde languette de la première cellule nue est une languette d'électrode négative ; ou la première languette de la première cellule nue est une languette d'électrode négative, et la seconde languette de la première cellule nue est une languette d'électrode positive ; et la première languette de la première cellule nue et la seconde languette de la première cellule nue forment un premier port de charge et de décharge (B) ; et
la seconde cellule nue présente une première languette (213b) et une seconde languette (214b) ; la première languette de la seconde cellule nue est une languette d'électrode positive, et la seconde languette de la seconde cellule nue est une languette d'électrode négative ; ou la première languette de la seconde cellule nue est une languette d'électrode négative, et la seconde languette de la seconde cellule nue est une languette d'électrode positive ; et la première languette de la seconde cellule nue et la seconde languette de la seconde cellule nue forment un second port de charge et de décharge (A).

3. Batterie selon la revendication 2, dans laquelle la première languette de la première cellule nue et la première languette de la seconde cellule nue sont toutes deux des languettes d'électrode positive, et la seconde languette de la première cellule nue et la seconde languette de la seconde cellule nue sont toutes deux des languettes d'électrode négative ; ou la première languette de la première cellule nue et la première languette de la seconde cellule nue sont toutes deux des languettes d'électrode négative, et la seconde languette de la première cellule nue et la seconde languette de la seconde cellule nue sont toutes deux des languettes d'électrode positive ; et
la première languette de la première cellule nue et la première languette de la seconde cellule nue sont empilées et fixées pour former une première languette composite, la seconde languette de la première cellule nue et la seconde languette de la seconde cellule nue sont empilées et fixées pour former une seconde languette composite, et le premier port de charge et de décharge et le second port de charge et de décharge sont intégrés en un seul port de charge et de décharge.

4. La batterie selon la revendication 2, dans laquelle la seconde languette de la première cellule nue et la seconde languette de la seconde cellule nue sont empilées et fixées pour former une languette composite, la première languette de la première cellule nue et la première languette de la seconde cellule nue sont situées respectivement sur des côtés opposés de la languette composite, et une borne du premier port de charge et de décharge et une borne du second port de charge et de décharge sont intégrées en un tout.

5. La batterie selon la revendication 4, dans laquelle la première languette de la première cellule nue est une languette d'électrode positive, et la seconde languette de la première cellule nue est une languette d'électrode négative ; et la première languette de la seconde cellule nue est une languette d'électrode négative, et la seconde languette de la seconde cellule nue est une languette d'électrode positive ; ou
la première languette de la première cellule nue est une languette d'électrode négative, et la seconde languette de la première cellule nue est une languette d'électrode positive ; et la première languette de la seconde cellule nue est une languette d'électrode positive, et la seconde languette de la seconde cellule nue est une languette d'électrode négative.

6. La batterie selon la revendication 2, dans laquelle la première languette de la première cellule nue, la seconde languette de la première cellule nue, la première languette de la seconde cellule nue, et la seconde languette de la seconde cellule nue sont séparées les unes des autres, et le premier port de charge et de décharge et le second port de charge et de décharge sont des ports de charge et de décharge différents.

7. La batterie selon l'une quelconque des revendications 2 à 6, comprenant en outre une carte de protection (22), dans laquelle la carte de protection présente un premier circuit de charge et de décharge, un troisième port de charge et de décharge (D), un second circuit de charge et de décharge, et un quatrième port de charge et de décharge (E) ;
le premier circuit de charge et de décharge est connecté électriquement à la première cellule nue par l'intermédiaire du premier port de charge et de décharge, le troisième port de charge et de décharge est situé sur le premier circuit de charge et de décharge, et la carte de protection est configurée pour être connectée électriquement à un module de gestion de puissance, un module de gestion de charge, et un chargeur par l'intermédiaire du troisième port de charge et de décharge, de manière à former une liaison de charge et de décharge ; et
le deuxième circuit de charge et de décharge est connecté électriquement à la deuxième cellule nue par le biais du deuxième port de charge et de décharge, le quatrième port de charge et de décharge est situé sur le deuxième circuit de charge et de décharge, et la carte de protection est configurée pour être connectée électriquement au module de gestion de l'alimentation, au module de gestion de la charge et au chargeur via le quatrième port de charge et de décharge, de manière à former une autre liaison de charge et de décharge.

8. Un dispositif électronique (100), comprenant :
un boîtier (10), muni d'un compartiment à batterie (30) prévu à l'intérieur ;
un module de gestion de l'alimentation et un module de gestion de la charge qui sont disposés dans le boîtier ; et
la batterie (20) selon l'une quelconque des revendications 1 à 7, dans laquelle la batterie est montée dans le compartiment à batterie, et la batterie est connectée électriquement au module de gestion de l'alimentation et au module de gestion de la charge.
